(19) Europäisches Patentamt
European Patent Office
Office européen des brevets

(11) **EP 2 223 426 B1**

(12) **EUROPÄISCHE PATENTSCHRIFT**

(45) Veröffentlichungstag und Bekanntmachung des Hinweises auf die Patenterteilung:
**31.08.2011  Patentblatt 2011/35**

(21) Anmeldenummer: **08865335.7**

(22) Anmeldetag: **12.11.2008**

(51) Int Cl.:
**H02P 21/00** (2006.01)

(86) Internationale Anmeldenummer:
**PCT/EP2008/065354**

(87) Internationale Veröffentlichungsnummer:
**WO 2009/080407 (02.07.2009 Gazette 2009/27)**

(54) **VERFAHREN ZUM BETRIEB EINER ROTIERENDEN ELEKTRISCHEN MASCHINE**

METHOD FOR OPERATING A ROTATING ELECTRIC MACHINE

PROCÉDÉ DE FONCTIONNEMENT D'UNE MACHINE ÉLECTRIQUE ROTATIVE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.12.2007  EP 07150189**

(43) Veröffentlichungstag der Anmeldung:
**01.09.2010  Patentblatt 2010/35**

(73) Patentinhaber: **ABB Research Ltd.**
**8050 Zürich (CH)**

(72) Erfinder:
 • **PAPAFOTIOU, Georgios**
   **CH-8134 Adliswil (CH)**
 • **ZURFLUH, Franz**
   **CH-5200 Brugg (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**EP-A- 1 670 135**

 • **MARTINS, C.A.; ROBOAM, X.; MEYNARD, T.A.; CARVALHO, A.S.: "Switching frequency imposition and ripple reduction in DTC drives by using a multilevel converter" IEEE TRANSACTIONS ON POWER ELECTRONICS, Bd. 17, März 2002 (2002-03), Seiten 286-297, XP002508619**

**Beschreibung**

**Technisches Gebiet**

Die Erfindung bezieht sich auf das Gebiet der Betriebsverfahren rotierender elektrischer Maschinen. Sie geht aus von einem Verfahren zum Betrieb einer rotierenden elektrischen Maschine gemäss dem Oberbegriff der unabhängigen Ansprüche.

**Stand der Technik**

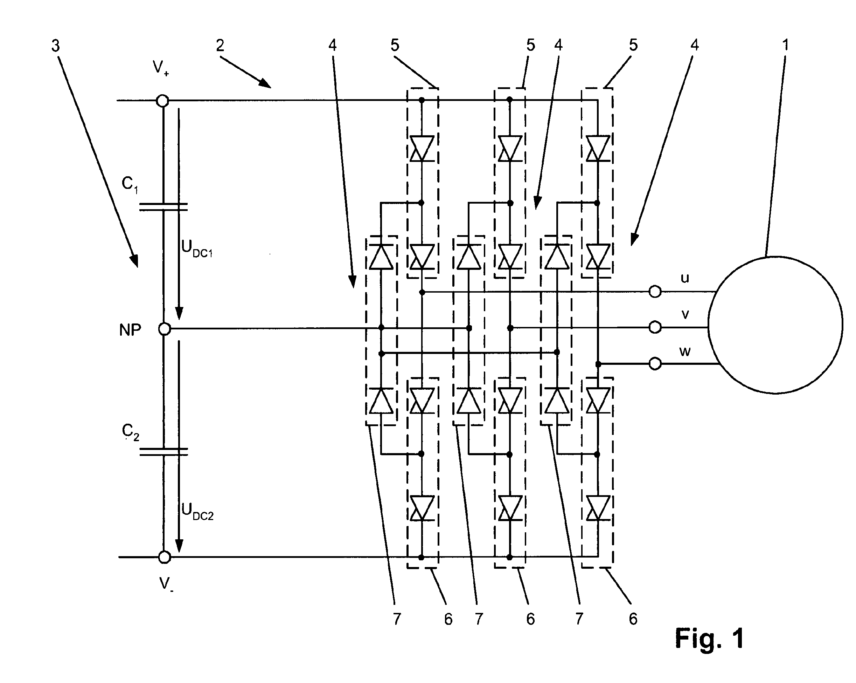

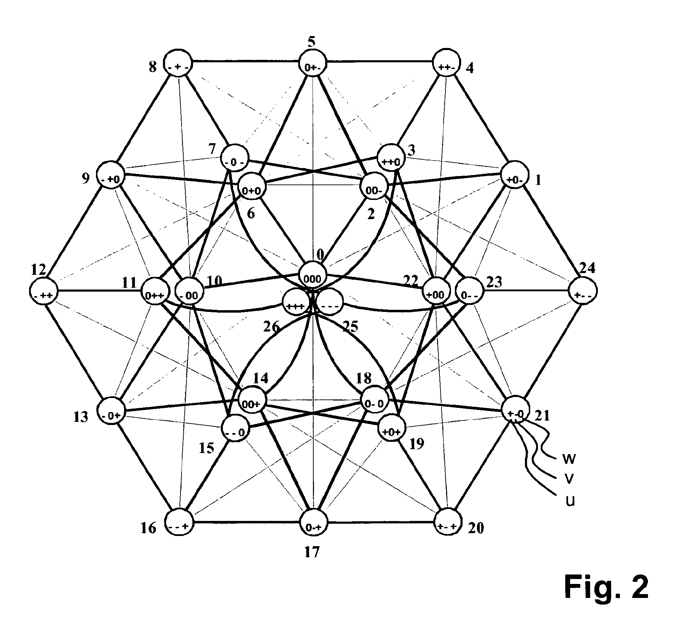

Heute werden in vielen Anwendungen Hochleistungsspannungsumrichterschaltungen eingesetzt. Eine solche Umrichterschaltung schaltet gängigerweise drei Spannungsniveaus und wird häufig zum Betrieb von rotierenden elektrischen Maschinen, insbesondere in Synchron- und Asynchronmaschinen, eingesetzt, welche rotierenden elektrischen Maschinen üblicherweise drei Statorwicklungen aufweisen. Bei einem gängigen Verfahren zum Betrieb einer rotierenden elektrischen Maschine ist diese phasenmässig mit einer solchen einen Gleichspannungskreis aufweisenden Umrichterschaltung zur Schaltung von allgemein m Spannungsniveaus verbunden, wobei m ≥ 2 ist. Der Gleichspannungskreis ist bei einer Umrichterschaltung zur Schaltung von typischerweise drei Spannungsniveaus durch einen ersten Kondensator und durch einen in Serie zum ersten Kondensator geschalteten zweiten Kondensator gebildet, wobei der Gleichspannungskreis zudem am ersten Kondensator einen ersten Hauptanschluss, am zweiten Kondensator einen zweiten Hauptanschluss und einen durch die zwei seriell verbundenen Kondensatoren gebildeten Teilanschluss aufweist. Weiterhin umfasst die Umrichterschaltung zur Schaltung von drei Spannungsniveaus Leistungshalbleiterschalter, welche in üblicher Weise verschaltet sind. In Fig. 1 ist dazu eine Ausführungsform einer gängigen dreiphasigen Umrichterschaltung zur Schaltung von drei Spannungsniveaus gezeigt. Verfahrensmässig werden die Phasen der Umrichterschaltung allgemein mit dem Gleichspannungskreis nach einer ausgewählten Schaltzustandskombination von Schaltzuständen der Leistungshalbleiterschalter der Umrichterschaltung verbunden. Bei einer Umrichterschaltung zur Schaltung von drei Spannungsniveaus werden die Phasen der Umrichterschaltung demgemäss mit dem ersten Hauptanschluss, mit dem zweiten Hauptanschluss oder mit dem Teilanschluss nach einer ausgewählten Schaltzustandskombination von Schaltzuständen der Leistungshalbleiterschalter der Umrichterschaltung verbunden. In einem in Fig. 2 gezeigten Zustandsdiagramm sind diese Schaltzustandkombinationen und deren Übergänge zueinander gezeigt, wobei die "+" für eine Verbindung der entsprechenden Phase mit dem ersten Hauptanschluss, "-" für eine Verbindung der entsprechenden Phase mit dem zweiten Hauptanschluss und "0" für eine Verbindung der entsprechenden Phase mit dem Teilanschluss steht.

Die Auswahl der entsprechenden Schaltzustandkombinationen erfolgt beispielsweise nach der bekannten "Direkten Drehmomentregelung " (DTC - Direct Torque Control), bei der der aktuelle Istwert des Drehmoments der rotierenden elektrischen Maschine, des magnetischen Statorflusses der rotierenden elektrischen Maschine und des Potentials am Teilanschluss zunächst jeweils mit einem zugehörigen vorgegebenen Wertebereich verglichen werden. Der jeweils vorgegebene Wertebereich ist oder kann zeitvariant sein und wird gängigerweise durch einen übergeordneten Regelkreis aus Referenzwerten des Drehmoments der rotierenden elektrischen Maschine, des magnetischen Statorflusses der rotierenden elektrischen Maschine und des Potentials am Teilanschluss bestimmt. Überschreitet nun ein aktueller Istwert seinen zugehörigen vorgegebenen Wertebereich, so wird eine Schaltzustandskombination in Abhängigkeit der vorangehenden ausgewählten Schaltzustandskombination aus einer Tabelle ausgewählt, so dass der sich zu dieser Schaltzustandskombination ergebende aktuelle Wert allenfalls wieder innerhalb des zugehörigen Wertebereichs liegen könnte, wobei es dafür keine Garantie gibt. Zudem wird eine Schaltzustandskombination immer nur entweder bezüglich des aktuellen Istwertes des Drehmoments, des magnetischen Statorflusses oder des Potentials bei Überschreiten des zugehörigen Wertebereichs ausgewählt. Eine gemeinsame Betrachtung des aktuellen Istwertes des Drehmoments, des magnetischen Statorflusses und des Potentials findet nicht statt.

Problematisch bei einem vorstehend beschriebenen Verfahren zum Betrieb einer rotierenden elektrischen Maschine mittels der bekannten "Direkten Drehmomentregelung " ist, dass zwischen der vorangehenden ausgewählten Schaltzustandskombination und der aktuell ausgewählten Schaltzustandskombination typischerweise mehrere Übergänge vorliegen, welche in Fig. 2 als Linien zwischen den Schaltzustandskombinationen dargestellt sind. Die Schaltzustandskombinationen und die Übergänge von einer Schaltzustandskombination zu einer anderen sind allgemein fix in der Tabelle abgelegt, wobei typischerweise nicht sämtliche Kombinationsmöglichkeiten von Schaltzustandskombination gemäss Fig. 2 in der Tabelle abgelegt sind. Weiterhin wird bei der "Direkten Drehmomentregelung " nur eine Schaltzustandskombination in Abhängigkeit der vorangehenden ausgewählten Schaltzustandskombination mit den zugehörigen Übergängen ausgewählt, welche in der Tabelle abgelegt ist und welche den zur ausgewählten Schaltzustandskombination ergebende aktuelle Wert wieder innerhalb des zugehörigen Wertebereichs zurück bringt. Alternativ auszuwählende Schaltzustandskombinationen, insbesondere mit eventuell weniger Übergängen zur vorangehende ausgewählten Schaltzustandskombination sind in der Tabelle nicht abgelegt. Mehrere Übergänge zwischen Schaltzustandskombinationen generieren aber eine Vielzahl an Schalthandlungen der Leistungshalbleiterschalter der Umrichterschaltung, wodurch die Schaltfrequenz der Leistungshalbleiterschalter ansteigt. Eine solche hohe Schaltfrequenz erzeugt aber in den Leistungshalbleiterschaltern der Umrichterschaltung Wärmeverluste (höherer Energieverbrauch), durch welche die Leistungshalbleiterschalter schneller altern, beschädigt oder gar zerstört werden können.

In der EP 1 670 135 A1 ist dazu ein Verfahren zum Betrieb einer rotierenden elektrischen Maschine angegeben, durch welches die Schalfrequenz von Leistungshalbleiterschaltern einer mit der rotierenden elektrischen Maschine phasenmässig verbundenen Umrichterschaltung zur Schaltung von m Spannungsniveaus reduziert werden kann, wobei $m \geq 2$ ist. Verfahrensmässig werden in einem Schritt (a) die Phasen der Umrichterschaltung mit dem Gleichspannungskreis nach einer ausgewählten Schaltzustandskombination von Schaltzuständen von Leistungshalbleiterschaltern der Umrichterschaltung verbunden. Die Auswahl dieser Schaltzustandskombination erfolgt in folgenden weiteren Schritten:

(b) beginnend mit einem Startabtastzeitpunkt k für eine wählbare Anzahl N Abtastzeitpunkte:

Bestimmung sämtlicher Schaltzustandskombinationen zu jedem der N Abtastzeitpunkte, wobei $N \geq 1$ ist,

(c) Bildung von Schaltzustandssequenzen für jede bestimmte Schaltzustandskombination zum Startabtastzeitpunkt k, wobei jede Schaltzustandssequenz eine Aneinanderreihung von zu der jeweiligen Schaltzustandskombination zum Startabtastzeitpunkt k zugehöriger bestimmter Schaltzustandskombinationen der N Abtastzeitpunkte ist,
(d) für jede der Schaltzustandssequenzen Berechnung einer Drehmomenttrajektorie der rotierenden elektrischen Maschine und einer magnetischen Statorflusstrajektorie der rotierenden elektrischen Maschine aus ermittelten Zustandswertesätze der rotierenden elektrischen Maschine und der Umrichterschaltung für den Startabtastzeitpunkt k bis zum Abtastzeitpunkt k+N,
(e) Auswahl einer Schaltzustandssequenz, bei welcher eine zugehörige Drehmomenttrajektorie und eine magnetische Statorflusstrajektorie zum (k+N)-ten Abtastzeitpunkt jeweils innerhalb eines vorgegebenen Wertebereichs liegt und setzen dieser ausgewählten Schaltzustandssequenz,
(f) Wiederholung der Schritte (a) bis (d), wobei k=k+1 ist.

Bei dem Verfahren zum Betrieb einer rotierenden elektrischen Maschine nach der EP 1 670 135 A1 werden die Verfahrensschritte (b) bis (e) typischerweise auf einem digitalen Signalprozessor ausgeführt, wobei die Schritte (b) bis (e) dann beispielsweise als ladbares Computerprogramm realisiert sind. Die Vielzahl an Berechnungsschritten des Verfahrens nach der EP 1 670 135 A1 stellt aber ein Problem bezüglich der Rechenleistung für einen digitalen Signalprozessor dar, so dass daraus sehr lange und damit nicht akzeptable Rechenzeiten des digitalen Signalprozessors und somit auch lange Ausführungszeiten der Verfahrensschritte entstehen, aus welchen dann eine nicht rechtzeitige Verbindung der Phasen der Umrichterschaltung mit dem Gleichspannungskreis nach der ausgewählten Schaltzustandskombination von Schaltzuständen der Leistungshalbleiterschalter resultieren kann. Zudem ist es bei dem Verfahren nach der EP 1 670 135 A1 möglich, dass die Drehmomenttrajektorie oder die magnetische Statorflusstrajektorie jeder zugehörigen Schaltzustandskombination schon zum k-ten oder zum (k+1)-ten Abtastzeitpunkt ausserhalb des vorgegebenen Wertebereich liegt, wobei das Verfahren zum Betrieb einer rotierenden elektrischen Maschine nach der EP 1 670 135 A1 einen solchen Zustand nicht handhaben kann. Damit ist aber nur ein eingeschränkter Betrieb der rotierenden elektrischen Maschine möglich. Zur Entlastung des Hauptrechners bei der Bewältigung der bei hohen Abtast frequenzen anfallenden Datenmengen Schlägt die Veröffentlichung "switching Frequency imposition and Nipple Reduction in DTC Ornes by using a multilevel converter", IEEE 2002, die Verwendung eines Field Programmable Gate trays, FPGA, vor.

Darstellung der Erfindung

Aufgabe der Erfindung ist es deshalb, ein Verfahren zum Betrieb einer rotierenden elektrischen Maschine derart weiterzuentwickeln, dass die Rechenzeit der Berechnungsschritte des Verfahrens und damit die Ausführungszeit der Verfahrensschritte möglichst klein ist und welches Verfahren Schaltzustandskombinationen mit jeweils zugehöriger Drehmomenttrajektorie und magnetischer Statorflusstrajektorie, welche Drehmomenttrajektorie oder magnetischer Statorflusstrajektorie ausserhalb des vorgegebenen Wertebereichs liegen, handhaben kann. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zum Betrieb einer rotierenden elektrischen Maschine ist die rotierende elektrische Maschine phasenmässig mit einer einen Gleichspannungskreis aufweisenden Umrichterschaltung zur Schaltung von m Spannungsniveaus verbunden, wobei $m \geq 2$ ist. Verfahrensmässig werden in einem Schritt (a) die Phasen der Umrichterschaltung mit dem Gleichspannungskreis nach einer ausgewählten Schaltzustandskombination von Schaltzuständen von Leistungshalbleiterschaltern der Umrichterschaltung verbunden. Die Auswahl dieser Schaltzustandskombination erfolgt in folgenden weiteren Schritten:

(b) beginnend mit einem Startabtastzeitpunkt k für eine wählbare Anzahl N Abtastzeitpunkte:

> Bestimmung sämtlicher zulässiger Schaltzustandskombinationen zu jedem der N Abtastzeitpunkte, wobei N $\geq$ 1 ist,

(c) Bildung von Schaltzustandssequenzen für jede bestimmte Schaltzustandskombination zum Startabtastzeitpunkt k, wobei jede Schaltzustandssequenz eine Aneinanderreihung von zu der jeweiligen Schaltzustandskombination zum Startabtastzeitpunkt k zugehöriger bestimmter Schaltzustandskombinationen der N Abtastzeitpunkte ist. Erfindungsgemäss erfolgt die Auswahl der Schaltzustandskombination in folgenden weiteren Schritten erfolgt:

(d) Bestimmung nach Schritt (b) und Bildung nach Schritt (c) mittels eines Field Programmable Gate Arrays (FPGA),

(e1) Berechnung von Zustandszwischenwertesätzen der rotierenden elektrischen Maschine und der Umrichterschaltung für den Startabtastzeitpunkt k bis zum Abtastzeitpunkt k+N mittels eines digitalen Signalprozessors,

(e2) Berechnung von Zustandswertesätzen aus Schaltzustandssequenzen und aus den berechneten Zustandszwischenwertesätzen mittels des FPGAs,

(f) für jede der Schaltzustandssequenzen Berechnung einer Drehmomenttrajektorie der rotierenden elektrischen Maschine und einer magnetischen Statorflusstrajektorie der rotierenden elektrischen Maschine mittels des FPGAs aus den berechneten Zustandswertesätze für den Startabtastzeitpunkt k bis zum Abtastzeitpunkt k+N,

(f1) falls die Drehmomenttrajektorie (M) zum k-ten Abtastzeitpunkt eine vorgegebene obere Wertebereichsgrenze ($y_{M,max}$) nicht überschreitet oder eine vorgegebene untere Wertebereichsgrenze ($y_{M,min}$) nicht unterschreitet und falls die magnetischen Statorflusstrajektorie ($\phi$) zum k-ten Abtastzeitpunkt eine vorgegebene obere Wertebereichsgrenze ($y_{S,max}$) nicht überschreitet oder eine vorgegebene untere Wertebereichsgrenze ($y_{S,min}$) nicht unterschreitet, Auswahl der Schaltzustandskombination ($SK_{a,k}$) in folgenden Schritten (g) bis (k),

(g) Auswahl der Schaltzustandssequenzen ($SSK_a$) mittels des FPGAs, bei welchen eine zugehörige Drehmomenttrajektorie (M) und eine magnetische Statorflusstrajektorie ($\phi$) zum (k+N)-ten Abtastzeitpunkt jeweils innerhalb eines vorgegebenen Wertebereichs liegt, oder bei welchen sich die Trajektorienwerte ($M_{T,k}$, ..., $M_{T,k+N}$) einer zugehörigen Drehmomenttrajektorie (M) und die Trajektorienwerte ($\phi_{T,k}$, ..., $\phi_{T,k+N}$) einer zugehörigen magnetischen Statorflusstrajektorie ($\phi$) bezüglich des k-ten Abtastzeitpunktes bis zum (k+N)-ten Abtastzeitpunkt dem jeweiligen vorgegebenen Wertebereich annähert,

(h) für jede der ausgewählten Schaltzustandssequenzen ($SSK_a$) Bestimmung der Anzahl Zeitpunkte n mittels des FPGAs, bis die Extrapolation der Trajektorienwerte ($M_{T,k+N-1}$, $M_{T,k+N}$) der zugehörigen Drehmomenttrajektorie (M) oder der Trajektorienwerte ($\phi_{T,k+N-1}$, $\phi_{T,k+N}$) der magnetischen Statorflusstrajektorie ($\phi$) bezüglich des (k+N-1)-ten Abtastzeitpunktes und (k+N)-ten Abtastzeitpunktes ausserhalb des jeweiligen vorgegebenen Wertebereichs liegt,

(i) für jede der ausgewählten Schaltzustandssequenzen ($SSK_a$) Bestimmung der Gesamtanzahl Schaltübergänge s der zugehörigen bestimmten Schaltzustandskombinationen ($SK_k$, ..., $SK_{k+N}$) mittels des FPGAs,

(j) für jede der ausgewählten Schaltzustandssequenzen ($SSK_a$) Berechnung eines Gütewertes c aus der Anzahl Zeitpunkte n und der Gesamtanzahl Schaltübergänge s mittels des FPGAs,

(k) Setzen derjenigen bestimmten Schaltzustandskombination ($SK_k$) zum Startabtastzeitpunkt k als ausgewählte Schaltzustandskombination ($SK_{a,k}$) mittels des FPGAs, bei der der Gütewert c der zugehörigen ausgewählten Schaltzustandssequenz ($SSK_a$) am kleinsten ist,

(l) falls die Drehmomenttrajektorie (M) zum k-ten Abtastzeitpunkt eine vorgegebene obere Wertebereichsgrenze ($y_{M,max}$) überschreitet oder eine vorgegebene untere Wertebereichsgrenze ($y_{M,min}$) unterschreitet, Berechnung eines auf die obere und untere Wertebereichsgrenze ($y_{M,min}$, $y_{M,max}$) bezogenen Drehmomentverletzungswertes ($V_{M,k}$,...,$V_{M,k+N}$) mittels des FPGAs für den Abtastzeitpunkt k bis zu dem Abtastzeitpunkt k+N, falls die magnetischen Statorflusstrajektorie ($\phi$) zum k-ten Abtastzeitpunkt eine vorgegebene obere Wertebereichsgrenze ($y_{S,max}$) überschreitet oder eine vorgegebene untere Wertebereichsgrenze ($y_{S,min}$) unterschreitet, Berechnung eines auf die obere und untere Wertebereichsgrenze ($y_{S,min}$, $y_{S,max}$) bezogenen Statorflussverletzungswertes ($v_{S,k}$,...,$V_{S,k+N}$) mittels des FPGAs für den Abtastzeitpunkt k bis zu dem Abtastzeitpunkt k+N, Auswahl der Schaltzustandskombination ($SK_{a,k}$) in folgenden Schritten (m) bis (o),

(m) für jede Schaltzustandssequenz (SSK) und für den Abtastzeitpunkt k bis zu dem Abtastzeitpunkt k+N Bestimmung des Maximalwertes ($v_{max}$) aus den Drehmomentverletzungswerten ($V_{M,k}$,....$VM_{,k+N}$) und den Statorflussverletzungswerten ($v_{S,k}$,...,$v_{S,k+N}$) mittels des FPGAs,

(n) für jede Schaltzustandssequenz (SSK) Bildung der Summe ($S_{vmax}$) aus den Maximalwerten ($V_{max}$) mittels des FPGAs,

(o) Setzen derjenigen bestimmten Schaltzustandskombination ($SK_k$) zum Startabtastzeitpunkt k als ausgewählte Schaltzustandskombination ($SK_{a,k}$) mittels des FPGAs, bei der die Summe ($S_{vmax}$) der Maximalwerte ($v_{max}$) am kleinsten ist,

(p) Wiederholung der Schritte (a) bis (o), wobei k=k+1 ist.

Als Alternative zu den Schritten (m) bis (o) kann die Auswahl Schaltzustandskombination auch nach folgenden weiteren Schritten erfolgen:

(m) für jede Schaltzustandssequenz (SSK) und für den Abtastzeitpunkt k bis zu dem Abtastzeitpunkt k+N Bestimmung des Maximalwertes ($v_{max}$) aus den Drehmomentverletzungswerten ($v_{M,k},...v_{VM,k+N}$) und den Statorflussverletzungswerten ($v_{S,k},...,v_{S,k+N}$) mittels des FPGAs,

(n) für jede Schaltzustandssequenz (SSK) Bildung der Summe ($S_{vmax}$) aus den Maximalwerten ($v_{max}$) mittels des FPGAs,

(o) Setzen derjenigen bestimmten Schaltzustandskombination ($SK_k$) zum Startabtastzeitpunkt k als ausgewählte Schaltzustandskombination ($SK_{a,k}$) mittels des FPGAs, bei der die Summe ($S_{vmax}$) der Maximalwerte ($v_{max}$) am kleinsten ist,

Durch die Verwendung des FPGAs für die Verfahrensschritte (d), d.h. für die Verfahrensschritte (b) und (c), und für die Verfahrensschritte (f) bis (k) wird der eingesetzte digitale Signalprozessor, welcher für den Verfahrensschritt (e1) eingesetzt wird, nur für die für den Schritt (e1) des Verfahrens notwendigen die Berechnungsschritte eingesetzt, so dass Schritt (e1) nur einen kurze Rechenzeit benötigt. Damit stehen die in Schritt (e1) berechneten Zustandszwischenwertesätze mit Vorteil schon nach sehr kurzer Zeit zur Verfügung und können durch das FPGA dann unmittelbar, insbesondere für die Verfahrensschritte (d), d.h. für die Verfahrensschritte (b) und (c), und für die Verfahrensschritte (e2) bis (k) weiterverwendet werden, wobei das FPGA diese Verfahrensschritte ebenfalls in sehr kurzer Zeit, insbesondere durch seine Möglichkeit der parallelen Berechnung von seriellen Berechnungssequenzen, abarbeitet. Insgesamt kann durch den Einsatz des FPGA in Verbindung mit dem digitalen Signalprozessor die Rechenzeit der Berechnungsschritte des Verfahrens und damit die Ausführungszeit der Verfahrensschritte vorteilhaft klein gehalten werden, so dass die Verbindung der Phasen der Umrichterschaltung mit dem Gleichspannungskreis nach der ausgewählten Schaltzustandskombination von Schaltzuständen der Leistungshalbleiterschalter stets rechtzeitig erfolgt.

Mittels der Schritte (b) bis (k) wird mit Vorteil stets die optimale Schaltzustandskombination ausgehend von der vorangehenden ausgewählten Schaltzustandskombination und bezüglich der Anzahl Übergänge von der vorangehenden ausgewählten Schaltzustandskombination zu der ausgewählten Schaltzustandskombination und bezüglich des jeweiligen vorgegebenen Wertebereichs für das Drehmoment der rotierenden elektrischen Maschine und für den magnetischen Statorfluss der rotierenden elektrischen Maschine ausgewählt. Damit lässt sich die Anzahl an Schalthandlungen der Leistungshalbleiterschalter der Umrichterschaltung vorteilhaft verringern und damit die Schaltfrequenz der Leistungshalbleiterschalter reduzieren. Die reduzierte Schaltfrequenz führt dazu, dass in den Leistungshalbleiterschaltern weniger Wärmeverluste erzeugt werden, wodurch die Leistungshalbleiterschalter langsamer altern und weitestgehend vor Beschädigung oder Zerstörung geschützt werden können. Zudem werden die jeweiligen Wertebereiche insgesamt besser eingehalten.

Allgemein ermöglicht das erfindungsgemässe Verfahren somit eine Vorhersage des Verhaltens der rotierenden elektrischen Maschine über mehr als einen Abtastzeitpunkt für bestimmte Schaltzustandssequenzen, wobei der Horizont von N Abtastzeitpunkten nach Anwendung der Schritte (a) bis (k) durch den Schritt (p) um einen Abtastzeitpunkt verschoben wird und dann aber immer nur die erste Schaltzustandskombination, insbesondere die k-te Schaltzustandskombination, einer Schaltzustandssequenz ausgewählt wird. Ein Gütekriterium approximiert beziehungsweise bildet dann die Schaltfrequenz nach. Schliesslich werden bei dem erfindungsgemässen Verfahren ferner die Schaltzustandskombinationen bezüglicher aller relevanten Grössen, insbesondere das Drehmoment und der magnetische Statorfluss, bei Überschreiten des zugehörigen Wertebereichs gemeinsam betrachtet.

Mittels der Schritte (I) bis (o) wird mit Vorteil für den Fall, dass die jeweils zugehörige Drehmomenttrajektorie oder die magnetischer Statorflusstrajektorie ausserhalb des vorgegebenen Wertebereichs liegt, stets die optimale Schaltzustandskombination gewählt. Damit ist das erfindungsgemässe Verfahren in der Lage, Schaltzustandskombinationen mit jeweils zugehöriger Drehmomenttrajektorie und magnetischer Statorflusstrajektorie, welche ausserhalb des vorgegebenen Wertebereichs liegen, handhaben zu können. Demzufolge ist nun ein uneingeschränkter Betrieb der rotierenden elektrischen Maschine möglich.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1    eine Ausführungsform einer dreiphasigen Umrichterschaltung zur Schaltung von drei Spannungsniveaus,

Fig. 2    ein Zustandsdiagramm mit Schaltzustandkombinationen der Phasen der Um- richterschaltung und

Fig. 3     ein schematischer Verlauf von berechneten Drehmomenttrajektorien für N=2 Abtastzeitpunkte.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

In Fig. 1 ist eine Ausführungsform einer dreiphasigen Umrichterschaltung 2 zur Schaltung von drei Spannungsniveaus gezeigt, wobei eine rotierende elektrische Maschine 1 phasenmässig mit einem Gleichspannungskreis 3 Umrichterschaltung 2 verbunden ist. Allgemein kann die rotierende elektrische Maschine 1 mit einer Umrichterschaltung 2 zur Schaltung von m Spannungsniveaus verbunden sein, wobei dann $m \geq 2$ ist. Gemäss Fig. 1 ist der Gleichspannungskreis 3 durch einen ersten Kondensator $C_1$ und durch einen in Serie zum ersten Kondensator $C_1$ geschalteten zweiten Kondensator $C_2$ gebildet, wobei $C_1$ wertemässig im wesentlichen gleich $C_2$ ist. Der Gleichspannungskreis 3 gemäss der beispielhaften Ausführungsform einer Umrichterschaltung zur Schaltung von drei Spannungsniveaus nach Fig. 1 weist am ersten Kondensator $C_1$ einen ersten Hauptanschluss $V_+$, am zweiten Kondensator $C_2$ einen zweiten Hauptanschluss V- und einen durch die zwei seriell verbundenen Kondensatoren $C_1$, $C_2$ gebildeten Teilanschluss NP auf. Darüber hinaus umfasst die Umrichterschaltung gemäss Fig. 1 ein für jede Phase u, v, w vorgesehenes Teilumrichtersystem 4, welches jeweils durch eine erste Schaltgruppe 5, durch eine zweite Schaltgruppe 6 und durch eine dritte Schaltgruppe 7 gebildet ist, wobei jede Schaltgruppe 5, 6, 7 durch zwei in Serie geschaltete Leistungshalbleiterschalter gebildet ist. Weiterhin ist bei jedem Teilumrichtersystem 4 die erste Schaltgruppe 5 mit dem ersten Hauptanschluss $V_+$ und die zweite Schaltgruppe 6 mit dem zweiten Hauptanschluss V- verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss NP verbunden. Die Leistungshalbleiterschalter der ersten und zweiten Schaltgruppe 5, 6 sind gemäss Fig. 1 als ansteuerbare bidirektionale Leistungshalbleiterschalter ausgebildet, wobei die Leistungshalbleiterschalter der dritten Schaltgruppe 7 als unidirektionale nicht-ansteuerbare Leistungshalbleiterschalter ausgebildet sind. Es ist aber auch denkbar, dass auch die Leistungshalbleiterschalter der dritten Schaltgruppe 7 als ansteuerbare bidirektionale Leistungshalbleiterschalter ausgebildet sind.

Verfahrensmässig werden nun die Phasen u, v, w der Umrichterschaltung 2, bei der es sich allgemein um eine Umrichterschaltung 2 zur Schaltung m Spannungsniveaus handelt, in einem ersten Schritt (a) mit dem Gleichspannungskreis 3 nach einer ausgewählten Schaltzustandskombination $SK_{a,k}$ von Schaltzuständen der Leistungshalbleiterschaltern der Umrichterschaltung 2 verbunden. Wie bereits eingangs erwähnt, ist in Fig. 2a beispielhaft ein Zustandsdiagramm von Schaltzustandskombinationen einer Umrichterschaltung 2 zur Schaltung von drei Spannungsniveaus gezeigt, wobei "+" für eine Verbindung der entsprechenden Phase u, v, w mit dem ersten Hauptanschluss $V_+$, "-" für eine Verbindung der entsprechenden Phase u, v, w mit dem zweiten Hauptanschluss $V_-$ und "0" für eine Verbindung der entsprechenden Phase u, v, w mit dem Teilanschluss NP steht und die Linien zwischen den Schaltzustandskombinationen SK zulässige Übergänge zwischen den Schaltzustandskombinationen SK darstellen. Es sei erwähnt, dass sich ein Zustandsdiagramm von Schaltzustandskombinationen einer Umrichterschaltung 2 beispielsweise zur Schaltung von m=5 Spannungsniveaus anders darstellen würde. Insbesondere kann der Fachmann sicher eine Umrichterschaltung realisieren, bei welcher ausgehend von einer Schaltzustandskombination SK ohne Einschränkung alle möglichen schaltbaren Schaltzustandskombinationen SK dieser Umrichterschaltung geschaltet werden können.

Die Auswahl der vorstehend genannten Schaltzustandskombination $SK_{a,k}$ erfolgt in folgenden weiteren Schritten:

Bei Schritt (b) werden beginnend mit einem Startabtastzeitpunkt k für eine wählbare Anzahl N Abtastzeitpunkte sämtliche zulässige Schaltzustandskombinationen $SK_k,..., SK_{k+N}$ zu jedem der N Abtastzeitpunkte, vorzugsweise ausgehend von der jeweils vorangehenden bestimmten Schaltzustandskombination $SK_{k-1}$, bestimmt, wobei $N \geq 1$ ist, und wobei vorzugsweise die erste vorangehende bestimmte Schaltzustandskombination $SK_{k-1}$ die vorangehende ausgewählte Schaltzustandskombination $SK_{a,k-1}$, d.h. zum Abtastzeitpunkt k-1, ist.
Bei Schritt (c) werden Schaltzustandssequenzen SSK für jede bestimmte Schaltzustandskombination $SK_k$ zum Startabtastzeitpunkt k gebildet, wobei jede Schaltzustandssequenz SSK eine Aneinanderreihung von zu der jewei-

ligen Schaltzustandskombination $SK_k$ zum Startabtastzeitpunkt k zugehöriger bestimmter Schaltzustandskombinationen $SK_k$, ..., $SK_{k+N}$ der N Abtastzeitpunkte ist. Anschaulich gesehen repräsentiert eine solche Schaltzustandssequenz SSK beispielhaft eine Reihe von möglichen Schaltzustandskombinationen $SK_k$, ..., $SK_{k+N}$ gemäss Fig. 2 entlang der zugehörigen Linien zu einer der möglichen Schaltzustandskombinationen $SK_k$ zum Startabtastzeitpunkt k.

Nach der Erfindung erfolgt die Auswahl der Schaltzustandskombination ($SK_{a,k}$) in folgenden weiteren Schritten:

Bei Schritt (d) erfolgt die Bestimmung nach Schritt (b) und Bildung nach Schritt (c) mittels eines Field Programmable Gate Arrays (FPGA). Bei Schritt (e1) erfolgt die Berechnung von Zustandszwischenwertesätzen $Y_{e,k}$,..., $Y_{e,k+N}$ der rotierenden elektrischen Maschine 1 und der Umrichterschaltung 2 für den Startabtastzeitpunkt k bis zum Abtastzeitpunkt k+N mittels eines digitalen Signalprozessors. Bei Schritt (e2) erfolgt dann die Berechnung von Zustandswertesätzen $X_{e,k}$,..., $X_{e,k+N}$ aus Schaltzustandssequenzen SSK und aus den berechneten Zustandszwischenwertesätzen $Y_{e,k}$,..., $Y_{e,k+N}$ mittels des FPGAs. Bei Schritt (f) wird dann für jede der Schaltzustandssequenzen SSK eine Drehmomenttrajektorie M der rotierenden elektrischen Maschine 1 und eine magnetische Statorflusstrajektorie e der rotierenden elektrischen Maschine 1 aus den berechneten Zustandswertesätzen $X_{e,k}$,..., $X_{e,k+N}$ der rotierenden elektrischen Maschine und der Umrichterschaltung für den Startabtastzeitpunkt k bis zum Abtastzeitpunkt k+N mittels des FPGAs berechnet. Die Drehmomenttrajektorie M der rotierenden elektrischen Maschine 1 und die magnetische Statorflusstrajektorie $\phi$ enthält dann Trajektorienwerte $M_{T,k+2}$, ..., $M_{T,k+N}$ beziehungsweise die Trajektorienwerte $\phi_{T,k+2}$, ..., $\phi_{T,k+N}$. Jeder der vorstehend genannten Zustandszwischenwertesätze $Y_{e,k}$,..., $Y_{e,k+N}$ beinhaltet beispielsweise zwei Statorflusswerte $\phi_{eS1,k}$,..., $\phi_{eS1,k+N}$; $\phi_{eS2,k}$,..., $\phi_{eS2,k+N}$, zwei Rotorflusswerte $\phi_{eR1,k}$,..., $\phi_{eR1,k+N}$; $\phi_{eR2,k}$,..., $\phi_{eR2,k+N}$ und gegebenenfalls einen Geschwindigkeitswert $V_{e,k}$,..., $V_{e,k+N}$. Zur Berechnung der Zustandszwischenwertesätze $Y_{e,k}$,..., $Y_{e,k+N}$ werden die beiden Statorflusswerte $\phi_{eS1,k}$,..., $\phi_{eS1,k+N}$; $\phi_{eS2,k}$,..., $\phi_{eS2,k+N}$, die beiden Rotorflusswerte $\phi_{eR1,k}$,..., $\phi_{eR1,k+N}$; $\phi_{eR2,k}$,..., $\phi_{eR2,k+N}$ und gegebenenfalls der Geschwindigkeitswert $V_{e,k}$,..., $V_{e,k+N}$ mittels des digitalen Signalprozessors aus geschätzten oder durch Messung ermittelten Motorparametern berechnet, wobei diese berechneten Werte dann die Zustandszwischenwertesätze $Y_{e,k}$,..., $Y_{e,k+N}$ bilden. Daraufhin erfolgt die vorstehend bereits genannte Berechnung von der Zustandswertesätzen $X_{e,k}$,..., $X_{e,k+N}$ nach einem für den Fachmann bekannten Berechnungsmodell aus Schaltzustandssequenzen SSK und aus den berechneten Zustandszwischenwertesätzen $Y_{e,k}$,..., $Y_{e,k+N}$ mittels des FPGAs nach Schritt (e2). Die Berechnung der Zustandswertesätze $X_{e,k}$,..., $X_{e,k+N}$ ist iterativ, d.h. beispielsweise für die Berechnung des Zustandswertsatzes $X_{e,k+1}$ zum Abtastzeitpunkt k+1 wird der vorangehende Zustandszwischenwertesatz $Y_{e,k}$ zum Abtastzeitpunkt k und die Schaltzustandssequenzen SSK für die bestimmten Schaltzustandskombinationen $SK_k$ zum Abtastzeitpunkt k herangezogen.

Der digitale Signalprozessor wird demnach nur für die für den Schritt (e1) des Verfahrens notwendigen die Berechnungsschritte, d.h. zur Berechnung der Zustandszwischenwertesätze $Y_{e,k}$,..., $Y_{e,k+N}$ eingesetzt. Damit stehen die in Schritt (e1) berechneten Zustandszwischenwertesätzen $Y_{e,k}$,..., $Y_{e,k+N}$ mit Vorteil schon nach sehr kurzer Zeit zur Verfügung und können durch das FPGA dann unmittelbar zur Berechnung der Zustandswertesätze $X_{e,k}$,..., $X_{e,k+N}$ und dann zur Berechnung der Drehmomenttrajektorie M und der magnetischen Statorflusstrajektorie e weiterverwendet werden. Sind beispielsweise für die Berechnung eines Trajektorienwertes $M_{T,k}$, ..., $M_{T,k+N}$ der Drehmomenttrajektorie M mehrere Berechnungsschritte, wie z.B. Additionen, Multiplikationen und dergleichen notwendig, so werden diese Berechnungsschritte mit Vorteil vom FPGA seriell abgearbeitet, so dass eine serielle Berechnungssequenz (sog. "pipelining") entsteht. Die Berechnung eines Trajektorienwertes $\phi_{T,k}$, ..., $\phi_{T,k+N}$ der magnetischen Statorflusstrajektorie $\phi$ wird vom FPGA in analoger Weise berechnet, wobei die serielle Berechnungssequenz zur Berechnung eines Trajektorienwertes $M_{T,k}$, ..., $M_{T,k+N}$ der Drehmomenttrajektorie M vorteilhaft parallel zur Berechnungssequenz zur Berechnung eines Trajektorienwertes $\phi_{T,k}$, ..., $\phi_{T,k+N}$ der magnetischen Statorflusstrajektorie $\phi$ im FPGA abläuft, wodurch effektiv Rechenzeit gespart werden kann.

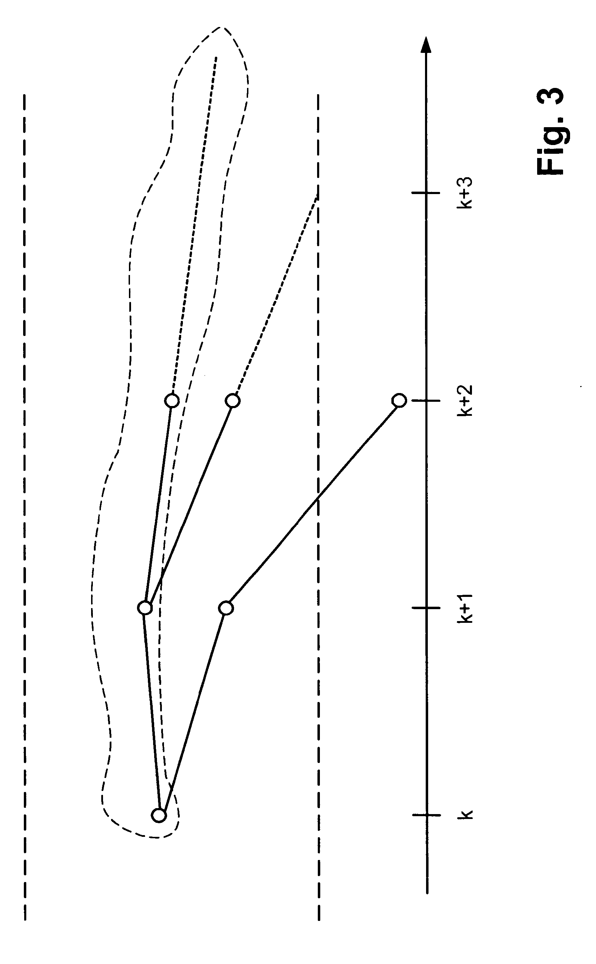

Durch die vorstehend beschriebene Berechnung der Trajektorienwerte $M_{T,k}$, ..., $M_{T,k,N}$; $\phi_{T,k}$, ..., $\phi_{T,k+N}$ entsteht für jede Schaltzustandssequenz SSK besagte Drehmomenttrajektorie M der rotierenden elektrischen Maschine 1 und eine magnetische Statorflusstrajektorie $\phi$ der rotierenden elektrischen Maschine 1, wobei in Fig. 3 beispielhaft ein schematischer Verlauf von solchen berechneten Drehmomenttrajektorien M von zugehörigen Schaltzustandssequenzen SSK für N=2 Abtastzeitpunkte gezeigt ist und dabei die Punkte der Drehmomenttrajektorien M den zugehörigen ermittelten Trajektorienwerten $M_{T,k}$, ..., $M_{T,k+N}$ entsprechen. Es sei erwähnt, dass auch zunächst sämtliche Zustandswertesätze $X_{e,k}$,..., $X_{e,k+N}$ für die Abtastzeitpunkte k bis k+N gemäss vorstehend erläutertem Vorgehen ermittelt werden können und danach dann daraus die jeweiligen Trajektorienwerte $M_{T,k}$, ..., $M_{T,k+N}$; $\phi_{T,k}$, ..., $\phi_{T,k+N}$ für die Abtastzeitpunkte k bis k+N zur Bildung der Drehmomenttrajektorie M und der magnetische Statorflusstrajektorie $\phi$ nach vorstehendem Vorgehen berechnet werden.

In dem weiteren Schritt (f1) erfolgt die Auswahl der Schaltzustandskombination ($SK_{a,k}$) in folgenden Schritten (g) bis (k), falls die Drehmomenttrajektorie (M) zum k-ten Abtastzeitpunkt eine vorgegebene obere Wertebereichsgrenze ($y_{M,max}$) nicht überschreitet oder eine vorgegebene untere Wertebereichsgrenze ($y_{M,min}$) nicht unterschreitet und falls die magnetischen Statorflusstrajektorie ($\phi$) zum k-ten Abtastzeitpunkt eine vorgegebene obere Wertebereichsgrenze ($y_{S,max}$) nicht überschreitet oder eine vorgegebene untere Wertebereichsgrenze ($y_{S,min}$) nicht unterschreitet. In dem weiteren Schritt (g) werden dann die Schaltzustandssequenzen $SSK_a$ mittels des FPGAs ausgewählt, bei welchen eine zugehörige Drehmomenttrajektorie M und eine magnetische Statorflusstrajektorie $\phi$ zum (k+N)-ten Abtastzeitpunkt jeweils innerhalb eines vorgegebenen Wertebereichs liegt. Bezüglich der Drehmomenttrajektorie M ist der Wertebereich durch eine vorgegebene obere Wertebereichsgrenze $y_{M,max}$ und eine vorgegebene untere Wertebereichsgrenze $y_{M,min}$ bestimmt. Bezüglich der Statorflusstrajektorie $\phi$ ist der Wertebereich durch eine vorgegebene obere Wertebereichsgrenze $y_{S,max}$ und eine vorgegebene untere Wertebereichsgrenze $y_{S,min}$ bestimmt. Bezogen auf die Drehmomenttrajektorien M gemäss Fig. 3 würde dies nur für die oberen beiden Drehmomenttrajektorien M, nicht aber für die untere Drehmomenttrajektorie M zutreffen, wobei der vorgegebene Wertebereich in Fig. 3 durch die zwei gestrichelten horizontalen Linien angedeutet ist. Es sei erwähnt, dass der jeweils vorgegebene Wertebereich zeitvariant ist und gängigerweise durch einen übergeordneten Regelkreis aus Referenzwerten des Drehmoments der rotierenden elektrischen Maschine 1 und des magnetischen Statorflusses der rotierenden elektrischen Maschine 1 bestimmt wird, wobei dem Fachmann solche Regelkreise bekannt sind. Vorzugsweise ist ein solcher Regelkreis auf dem digitalen Signalprozessor realisiert, d.h. der Wertebereich wird durch den digitalen Signalprozessor bereitgestellt. Alternativ werden dann die Schaltzustandssequenzen $SSK_a$ ausgewählt, bei welchen sich die Trajektorienwerte $M_{T,k}$, ..., $M_{T,k+N}$ einer zugehörigen Drehmomenttrajektorie M und die Trajektorienwerte $\phi_{T,k}$, ..., $\phi_{T,k+N}$ einer zugehörigen magnetischen Statorflusstrajektorie $\phi$ bezüglich des k-ten Abtastzeitpunktes bis zum (k+N)-ten Abtastzeitpunkt dem jeweiligen vorgegebenen Wertebereich annähert.

Bei Schritt (h) wird daraufhin für jede der ausgewählten Schaltzustandssequenzen $SSK_a$ die Anzahl Zeitpunkte n mittels des FPGAs bestimmt, bis die Extrapolation der Trajektorienwerte $M_{T,k+N-1}$, $M_{T,k+N}$ der zugehörigen Drehmomenttrajektorie M oder der Trajektorienwerte $\phi_{T,k+N}-1$, $\phi_{T,k+N}$ der magnetischen Statorflusstrajektorie $\phi$ bezüglich des (k+N-1)-ten Abtastzeitpunktes und (k+N)-ten Abtastzeitpunktes ausserhalb des jeweiligen vorgegebenen Wertebereichs liegt, d.h. bis eine der Extrapolationen den jeweiligen vorgegebenen Wertebereich als erstes verlässt beziehungsweise die Grenzen des jeweiligen vorgegebenen Wertebereichs schneidet. Die vorstehend genannte Bestimmung durch das FPGA läuft mit Vorteil ebenfalls seriell ab (sog. "pipelining"). In Fig. 3 ist die jeweilige Extrapolation für die beiden oberen relevanten Drehmomenttrajektorien M gestrichelt eingezeichnet, wobei die Extrapolation der einen oberen relevanten Drehmomenttrajektorie M gemäss Fig. 3 den vorgegebenen Wertebereich bereits bei k+3 verlässt, die Extrapolation der anderen oberen relevanten Drehmomenttrajektorie M, welche zur besseren Kennzeichnung gestrichelt umrandet ist, jedoch bei k+3 noch innerhalb des vorgegebenen Wertebereichs liegt.

Ferner wird bei Schritt (i) für jede der ausgewählten Schaltzustandssequenzen $SSK_a$ die Gesamtanzahl Schaltübergänge s der zugehörigen bestimmten Schaltzustandskombinationen $SK_k$, ..., $SK_{k+N}$ mittels des FPGAs bestimmt. Auch diese Bestimmung durch das FPGA läuft mit Vorteil seriell ab (sog. "pipelining").

Weiterhin wird bei Schritt (j) für jede der ausgewählten Schaltzustandssequenzen $SSK_a$ ein Gütewert c aus der Anzahl Zeitpunkte n und der Gesamtanzahl Schaltübergänge s mittels des FPGAs berechnet. Vorzugsweise wird der Gütewert c durch Division der Gesamtanzahl Schaltübergänge s durch die Anzahl Zeitpunkte n berechnet. Diese Berechnung durch das FPGA läuft vorteilhaft seriell ab (sog. "pipelining").

In einem weiteren Schritt (k) wird dann diejenige bestimmte Schaltzustandskombination $SK_k$ zum Startabtastzeitpunkt k als ausgewählte Schaltzustandskombination $SK_{a,k}$ mittels des FPGAs gesetzt, bei der der Gütewert c der zugehörigen ausgewählten Schaltzustandssequenz $SSK_a$ am kleinsten ist. Das vorstehend genannte Setzen durch das FPGA läuft vorteilhaft seriell ab (sog. "pipelining").

In dem weiteren Schritt (l) wird falls anstelle Schritt (f1) nun die Drehmomenttrajektorie M zum k-ten Abtastzeitpunkt eine vorgegebene obere Wertebereichsgrenze $y_{M,max}$ überschreitet oder eine vorgegebene untere Wertebereichsgrenze $y_{M,min}$ unterschreitet, mittels des FPGAs ein auf die obere und untere Wertebereichsgrenze $y_{M,min}$, $y_{M,max}$ bezogener Drehmomentverletzungswert $v_{M,k}$,...,$v_{M,K+N}$ für den Abtastzeitpunkt k bis zu dem Abtastzeitpunkt K+N berechnet. Falls die magnetischen Statorflusstrajektorie $\phi$ zum k-ten Abtastzeitpunkt eine vorgegebene obere Wertebereichsgrenze $y_{S,max}$ überschreitet oder eine vorgegebene untere Wertebereichsgrenze $y_{S,min}$ unterschreitet, wird ein auf die obere und untere Wertebereichsgrenze $Y_{S,min}$, $y_{s,max}$ bezogener Statorflussverletzungswertes $v_{S,k}$,...,$v_{S,K+N}$ mittels des FPGAs für den Abtastzeitpunkt k bis zu dem Abtastzeitpunkt K+N berechnet. Bei Schritt (m) wird dann für jede Schaltzustandssequenz SSK und für den Abtastzeitpunkt k bis zu dem Abtastzeitpunkt K+N der Maximalwert $v_{max}$ aus den Drehmomentverletzungswerten $v_{M,k}$,...,$v_{M,K+N}$ und den Statorflussverletzungswerten $v_{S,k}$,...,$v_{S,K+N}$ mittels des FPGAs bestimmt. Bei Schritt (n) wird anschliessend für jede Schaltzustandssequenz SSK die Summe $S_{vmax}$ aus den Maximalwerten $v_{max}$ gebildet. In einem weiteren Schritt (o) wird dann diejenige bestimmte Schaltzustandskombination $SK_k$ zum Startabtastzeitpunkt k als ausgewählte Schaltzustandskombination $SK_{a,k}$ mittels des FPGAs gesetzt, bei der die Summe $S_{vmax}$ der Maximalwerte $v_{max}$ am kleinsten ist.

Als Alternative zu den Schritten (m) bis (o) kann die Auswahl Schaltzustandskombination auch nach folgenden weiteren Schritten erfolgen:

(m) für jede Schaltzustandssequenz (SSK) und für den Abtastzeitpunkt k bis zu dem Abtastzeitpunkt k+N Bestimmung des Maximalwertes ($v_{max}$) aus den Drehmomentverletzungswerten ($v_{M,k},...,V_{M,k+N}$) und den Statorflussverletzungswerten ($V_{S,k},...,v_{S,k+N}$) mittels des FPGAs,
(n) für jede Schaltzustandssequenz (SSK) Bildung der Summe ($S_{vmax}$) aus den Maximalwerten ($v_{max}$) mittels des FPGAs,
(o) Setzen derjenigen bestimmten Schaltzustandskombination ($SK_k$) zum Startabtastzeitpunkt k als ausgewählte Schaltzustandskombination ($SK_{a,k}$) mittels des FPGAs, bei der die Summe ($S_{vmax}$) der Maximalwerte ($v_{max}$) am kleinsten ist.

Schliesslich werden bei Schritt (p) die Schritte (a) bis (o) wiederholt, wobei k=k+1 ist, d.h. die Auswahl der Schaltzustandskombination $SK_{a,k}$ findet für k=k+1 gemäss dem vorstehend beschriebenen Ablauf nach den Schritten (a) bis (k) statt. N ist für jeden der Schritte (a) bis (l) konstant.

Durch die Verwendung des FPGAs für die Verfahrensschritte (d), d.h. für die Verfahrensschritte (b) und (c), und für die Verfahrensschritte (f) bis (k) wird der eingesetzte digitale Signalprozessor, welcher für den Verfahrensschritt (e1) eingesetzt wird, nur für die für den Schritt (e1) des Verfahrens notwendigen die Berechnungsschritte eingesetzt, so dass Schritt (e1) nur einen kurze Rechenzeit benötigt. Damit stehen die in Schritt (e1) berechneten Zustandszwischenwertesätze $Y_{e,k},...$ , $Y_{e,k+N}$ mit Vorteil schon nach sehr kurzer Zeit zur Verfügung und können durch das FPGA dann unmittelbar, insbesondere für die Verfahrensschritte (d), d.h. für die Verfahrensschritte (b) und (c), und für die Verfahrensschritte (e2) bis (k) weiterverwendet werden, wobei das FPGA diese Verfahrensschritte ebenfalls in sehr kurzer Zeit, insbesondere durch seine Möglichkeit der parallelen Berechnung von seriellen Berechnungssequenzen, abarbeitet. Vorteilhaft läuft die Bestimmung nach Schritt (h) bis (k) durch das FPGA seriell ab. Insgesamt kann durch den Einsatz des FPGA in Verbindung mit dem digitalen Signalprozessor die Rechenzeit der Berechnungsschritte des Verfahrens und damit die Ausführungszeit der Verfahrensschritte vorteilhaft klein gehalten werden, so dass die Verbindung der Phasen u, v, w der Umrichterschaltung 2 mit dem Gleichspannungskreis 3 nach der ausgewählten Schaltzustandskombination $SK_{a,k}$ von Schaltzuständen der Leistungshalbleiterschalter stets rechtzeitig erfolgt.

Mittels der Schritte (b) bis (k) und insbesondere durch die Extrapolation ist es zudem möglich, eine Vorhersage für das weitere Verhalten des Gesamtsystems, d.h. der rotierenden elektrischen Maschine 1 und der damit verbundenen Umrichterschaltung 2, zu treffen und danach mit Vorteil stets die optimale Schaltzustandskombination $SK_{a,k}$ ausgehend von der vorangehenden ausgewählten Schaltzustandskombination $SK_{a,k-1}$ und bezüglich der Anzahl Übergänge von der vorangehenden ausgewählten Schaltzustandskombination $SK_{a,k-1}$ zu der ausgewählten Schaltzustandskombination $SK_{a,k}$ und bezüglich des jeweiligen vorgegebenen Wertebereichs für das Drehmoment der rotierenden elektrischen Maschine 1 und für den magnetischen Statorfluss der rotierenden elektrischen Maschine 1 auszuwählen. Damit lässt sich die Anzahl an Schalthandlungen der Leistungshalbleiterschalter der Umrichterschaltung 2 vorteilhaft verringern und damit die Schaltfrequenz der Leistungshalbleiterschalter reduzieren. Die Leistungshalbleiterschalter generieren aufgrund der reduzierten Schaltfrequenz mit Vorteil weniger Wärmeverluste und haben dadurch einen geringeren Energieverbrauch, so dass die Leistungshalbleiterschalter dadurch langsamer altern und weitestgehend vor Beschädigung oder Zerstörung geschützt werden können.

Mittels der Schritte (l) bis (o) wird mit Vorteil für den Fall, dass die jeweils zugehörige Drehmomenttrajektorie M oder die magnetischer Statorflusstrajektorie φ ausserhalb des vorgegebenen Wertebereichs liegt, stets die optimale Schaltzustandskombination $SK_{a,k}$ gewählt. Damit ist das erfindungsgemässe Verfahren in der Lage, Schaltzustandskombinationen mit jeweils zugehöriger Drehmomenttrajektorie M und magnetischer Statorflusstrajektorie φ, welche ausserhalb des vorgegebenen Wertebereichs liegen, handhaben zu können. Somit ist vorteilhaft ein uneingeschränkter Betrieb der rotierenden elektrischen Maschine 1 möglich.

Wie bereits erwähnt, ist in Fig. 1 eine Umrichterschaltung 2 zur Schaltung von m=3 Spannungsniveaus gezeigt, wobei der Gleichspannungskreis 3 dann m-2 Teilanschlüsse NP, d.h. einen einzigen Teilanschluss NP aufweist. Für den allgemeinen Fall einer Umrichterschaltung 2 zur Schaltung von m Spannungsniveaus mit m $\geq$ 3 weist die Umrichterschaltung 2 dann am Gleichspannungskreis 3 m-2 Teilanschlüsse NP auf. Bezüglich Schritt (f) des erfindungsgemässen Verfahrens bedeutet dies, dass für jede der Schaltzustandssequenzen SSK zusätzlich m-2 Potentialtrajektorien $U_{NP}$ für Potentiale an den m-2 Teilanschlüssen NP aus Zustandswertesätzen $X_{e,k},...$ , $X_{e,k+N}$ der rotierenden elektrischen Maschine 1 und der Umrichterschaltung 2 für den Startabtastzeitpunkt k bis zum Abtastzeitpunkt k+N mittels des FPGAs berechnet werden. Die angesprochene Berechnung erfolgt analog der bereits erläuterten Berechnung der entsprechenden Drehmomenttrajektorie M der rotierenden elektrischen Maschine 1 und magnetischen Statorflusstrajektorie φ der rotierenden elektrischen Maschine 1. Weiterhin werden für m $\geq$ 3 bezüglich Schritt (g) die Schaltzustandssequenzen $SSK_a$ mittels des FPGAs ausgewählt werden, bei welchen zusätzlich zugehörige m-2 Potentialtrajektorien $U_{NP}$ zum (k+N)-ten Abtastzeitpunkt jeweils innerhalb eines vorgegebenen Wertebereichs liegen, oder bei welchen sich zusätzlich die Trajektorienwerte $U_{NP,k},...,U_{NP,K+N}$ zugehöriger m-2 Potentialtrajektorien $U_{NP}$ bezüglich des k-ten Abtastzeitpunktes bis zum (k+N)-ten Abtastzeitpunkt dem jeweiligen vorgegebenen Wertebereich annähern. Bezüglich der Potentialtrajektorien $U_{NP}$ ist der Wertebereich durch eine vorgegebene obere Wertebereichsgrenze $y_{NP,max}$ und eine vorgegebene untere Wertebereichsgrenze $y_{NP,min}$ bestimmt. Ferner wird für $m \geq 3$ bezüglich Schritt (h) für jede der ausgewählten Schaltzustandssequenzen $SSK_a$ die Anzahl Zeitpunkte n mittels des FPGAs bestimmt wird, bis die Extrapolation der Trajektorienwerte $M_{T,k+N-1}$, $M_{T,k+N}$ der zugehörigen Drehmomenttrajektorie M oder der Trajektorienwerte $\phi_{T,k+N-1}$, $\phi_{T,k+N}$ der magnetischen Statorflusstrajektorie $\phi$ oder der Trajektorienwerte $U_{NP,k+N-1}$, $U_{NP,k+N}$ der m-2 Potentialtrajektorien $U_{NP}$ bezüglich des (k+N-1)-ten Abtastzeitpunktes und (k+N)-ten Abtastzeitpunktes ausserhalb des jeweiligen vorgegebenen Wertebereichs liegt. Es versteht sich, dass für $m \geq 3$ die Schritte (a) bis (e2) und (i) bis (k) beibehalten werden.

Für $m \geq 3$ ist es durch die Schritte (b) bis (k) und insbesondere durch die Extrapolation nun möglich, eine Vorhersage für das weitere Verhalten des Gesamtsystems, d.h. der rotierenden elektrischen Maschine 1 und der damit verbundenen Umrichterschaltung 2, zu treffen und danach mit Vorteil stets die optimale Schaltzustandskombination $SK_{a,k}$ ausgehend von der vorangehenden ausgewählten Schaltzustandskombination $SK_{a,k-1}$ und bezüglich der Anzahl Übergänge von der vorangehenden ausgewählten Schaltzustandskombination $SK_{a,k-1}$ zu der ausgewählten Schaltzustandskombination $SK_{a,k}$ und bezüglich des jeweiligen vorgegebenen Wertebereichs für das Drehmoment der rotierenden elektrischen Maschine 1, für den magnetischen Statorfluss der rotierenden elektrischen Maschine 1 und für die m-2 Potential an den m-2 Teilanschlüssen NP auszuwählen. Damit lässt sich die Anzahl an Schalthandlungen der Leistungshalbleiterschalter der Umrichterschaltung 2, wie bereits erwähnt, vorteilhaft verringern und damit die Schaltfrequenz der Leistungshalbleiterschalter reduzieren.

Vorteilhaft wird allgemein in einem weiteren Schritt (q) der Schritt (b) und (c) ausgesetzt und eine Schaltzustandssequenz SSK für die vorangehende ausgewählte Schaltzustandskombination $SK_{a,k-1}$ mittels des FPGAs gebildet, wobei die Schaltzustandssequenz SSK dann eine Aneinanderreihung von N vorangehenden ausgewählten Schaltzustandskombination $SK_{a,k-1}$ ist, und zudem die vorangehende ausgewählte Schaltzustandskombination $SK_{a,k-1}$ als ausgewählte Schaltzustandskombination $SK_{a,k}$ mittels des FPGAs gesetzt und schliesslich Schritt (f) angewendet und die Schritte (f1) bis (o) ausgesetzt, falls die Trajektorienwerte $M_{T,k}$, ..., $M_{T,k+N}$ der zugehörigen Drehmomenttrajektorie M und die Trajektorienwerte $\phi_{T,k}$, ..., $\phi_{T,k+N}$ der zugehörigen magnetischen Statorflusstrajektorie $\phi$ bezüglich des k-ten Abtastzeitpunktes bis zum (k+N)-ten Abtastzeitpunkt innerhalb des jeweiligen vorgegebenen Wertebereichs liegen. Für $m \geq 3$ wird bei dem weiteren Schritt (q) der Schritt (b) und (c) ausgesetzt und eine Schaltzustandssequenz SSK für die vorangehende ausgewählte Schaltzustandskombination $SK_{a,k-1}$ mittels des FPGAs gebildet, wobei die Schaltzustandssequenz SSK dann eine Aneinanderreihung von N vorangehenden ausgewählten Schaltzustandskombination $SK_{a,k-1}$ ist, und zudem die vorangehende ausgewählte Schaltzustandskombination $SK_{a,k-}1$ als ausgewählte Schaltzustandskombination $SK_{a,k}$ mittels des FPGAs gesetzt und schliesslich Schritt (f) angewendet und die Schritte (f1) bis (o) ausgesetzt, falls die Trajektorienwerte $M_{T,k}$, ..., $M_{T,k+N}$ der zugehörigen Drehmomenttrajektorie M, die Trajektorienwerte $\phi_{T,k}$, ..., $\phi_{T,k+N}$ der zugehörigen magnetischen Statorflusstrajektorie $\phi$ und die Trajektorienwerte $U_{NP,k}$, ..., $U_{NP,k+N}$ zugehöriger m-2 Potentialtrajektorien $U_{NP}$ bezüglich des k-ten Abtastzeitpunktes bis zum (k+N)-ten Abtastzeitpunkt innerhalb des jeweiligen vorgegebenen Wertebereichs liegen. Auf diese Weise Rechenzeit gespart werden, da Schritte (b) und (c) und Schritte (f) bis (o) ausgesetzt werden. Es versteht sich, dass die Schritte (b) bis (o) dann angewendet werden und der weitere Schritt (q) nicht angewendet wird, falls vorstehend genannte Kriterien für die Trajektorienwerte $M_{T,k}$, ..., $M_{T,k-N}$; $\phi_{T,k}$, ..., $\phi_{T,k+N}$; $U_{NP,k}$, ..., $U_{NP,k+N}$ nicht erfüllt sind.

Es hat sich als vorteilhaft erwiesen, dass für die Extrapolation der Trajektorienwerte $M_{T,k+N-1}$, $M_{T,k+N}$ der Drehmomenttrajektorie M eine lineare Extrapolation gewählt wird, und dass für die Extrapolation der Trajektorienwerte $\phi_{T,k+N-1}$, $\phi_{T,k+N}$ der magnetischen Statorflusstrajektorie $\phi$ eine quadratische Extrapolation gewählt wird. In diesem Fall wird durch Wahl einer quadratischen Extrapolation für die magnetische Statorflusstrajektorie $\phi$ in Kombination mit der Wahl einer linearen Extrapolation für die Drehmomenttrajektorie M eine besonders genaue Vorhersage für das Verhalten des Gesamtsystems ermöglicht, so dass die Auswahl der Schaltzustandskombination $SK_{a,k}$ weiter präzisiert werden kann und daraus eine weitere Reduzierung der Schalfrequenz der Leistungshalbleiterschalter resultiert. Alternativ kann für $m \geq 3$ für die für die Extrapolation der Trajektorienwerte $M_{T,k+N-1}$, $M_{T,k+N}$ der Drehmomenttrajektorie M und der Trajektorienwerte $U_{NP,k+N-1}$, $U_{NP,k+N}$ der m-2 Potentialtrajektorien $U_{NP}$ jeweils eine lineare Extrapolation gewählt werden und für die Extrapolation der Trajektorienwerte $\phi_{T,k+N-1}$, $\phi_{T,k+N}$ der magnetischen Statorflusstrajektorie $\phi$ eine quadratische Extrapolation gewählt werden, wobei sich dieselben genannten Vorteile ergeben.

Weiterhin ist es denkbar, dass für die Extrapolation der Trajektorienwerte $M_{T,k+N-1}$, $M_{T,k+N}$ der Drehmomenttrajektorie M und der Trajektorienwerte $\phi_{T,k+N-1}$, $\phi_{T,k+N}$ der magnetischen Statorflusstrajektorie $\phi$ jeweils eine lineare Extrapolation gewählt wird, wobei für $m \geq 3$ für die Extrapolation der Trajektorienwerte $M_{T,k+N-1}$, $M_{T,k+N}$ der Drehmomenttrajektorie M, der Trajektorienwerte $\phi_{T,k+N-1}$, $\phi_{T,k+N}$ der magnetischen Statorftusstrajektorie $\phi$ und zusätzlich für die Extrapolation der Trajektorienwerte $U_{NP,k+N-1}$, $U_{NP,k+N}$ der m-2 Potentialtrajektorien $U_{NP}$ jeweils eine lineare Extrapolation gewählt wird.

Eine weitere Möglichkeit besteht darin, dass für die Extrapolation der Trajektorienwerte $M_{T,k+N-1}$, $M_{T,k+N}$ der Drehmomenttrajektorie M und der Trajektorienwerte $\phi_{T,k+N-1}$, $\phi_{T,k+N}$ der magnetischen Statorflusstrajektorie $\phi$ jeweils eine quadratische Extrapolation gewählt wird, wobei für $m \geq 3$ für die Extrapolation der Trajektorienwerte $M_{T,k+N-1}$, $M_{T,k+N}$

der Drehmomenttrajektorie M und der Trajektorienwerte $\phi_{T,k+N-1}$, $\phi_{T,k+N}$ der magnetischen Statorflusstrajektorie $\phi$ jeweils eine quadratische Extrapolation gewählt wird und zusätzlich für die Extrapolation der Trajektorienwerte $U_{NP,k+N-1}$, $U_{NP,k+N}$ der m-2 Potentialtrajektorien $U_{NP}$ eine lineare Extrapolation gewählt wird.

Für den allgemeinen Fall einer Umrichterschaltung 2 zur Schaltung von m Spannungsniveaus mit m ≥ 3 weist die Umrichterschaltung 2, wie bereits erwähnt, am Gleichspannungskreis 3 m-2 Teilanschlüsse NP auf. Bezüglich Schritt (f) des erfindungsgemässen Verfahrens bedeutet dies, dass für jede der Schaltzustandssequenzen SSK zusätzlich m-2 Potentialtrajektorien $U_{NP}$ für Potentiale an den m-2 Teilanschlüssen NP mittels des FPGAs berechnet werden. Weiterhin wird dann bezüglich Schritt (I) falls die m-2 Potentialtrajektorien $U_{NP}$ zum k-ten Abtastzeitpunkt eine vorgegebene obere Wertebereichsgrenze $y_{NP,max}$ überschreitet oder eine vorgegebene untere Wertebereichsgrenze $y_{NP,min}$ unterschreitet, ein auf die obere und untere Wertebereichsgrenze $y_{NP,min}$, $y_{NP,max}$ bezogener Potentialverletzungswert $v_{NP,k}$,...,$v_{NP,K+N}$ mittels des FPGAs für den Abtastzeitpunkt k bis zu dem Abtastzeitpunkt K+N für jede Potentialtrajektorie $U_{NP}$ berechnet und bezüglich Schritt (m) wird für jede Schaltzustandssequenz SSK und für den Abtastzeitpunkt k bis zu dem Abtastzeitpunkt K+N der Maximalwert $v_{max}$ zusätzlich aus den Potentialverletzungswerten $v_{NP,k}$,...,$v_{NP,K+N}$ mittels des FPGAs bestimmt.

Alternativ dazu wird für m ≥ 3 bezüglich Schritt (m) für jede Schaltzustandssequenz SSK und für den Abtastzeitpunkt k bis zu dem Abtastzeitpunkt K+N zusätzlich die Summe $S_{NP,v}$ aus den Potentialverletzungswerten $V_{NP,k}$,...,$v_{NP,K+N}$ gebildet und bezüglich Schritt (n) wird dann für jede Schaltzustandssequenz SSK der Maximalwert $v_{max}$ zusätzlich aus der Summe $S_{NP,v}$ der Potentialverletzungswerte $v_{NP,k}$,...,$v_{NP,K+N}$ gebildet.

Nachfolgend wird näher auf die Berechnung der Drehmomentverletzungswerte $v_{M,k}$,...,$v_{M,K+N}$, der Statorflussverletzungswerte $v_{S,k}$,...,$v_{S,K+N}$, und der Potentialverletzungswerte $v_{NP,k}$,...,$v_{NP,K+N}$ eingegangen. Falls die Drehmomenttrajektorie M zum k-ten Abtastzeitpunkt die vorgegebene obere Wertebereichsgrenze $y_{M,max}$ überschreitet, erfolgt die Berechnung des auf die obere und untere Wertebereichsgrenze $y_{M,min}$, $y_{M,max}$ bezogenen Drehmomentverletzungswertes $v_{M,k}$,...,$v_{M,K+N}$ für den Abtastzeitpunkt k bis zu dem Abtastzeitpunkt K+N nach folgender Formel

$$v_{M,k},...,v_{M,k+N} = \frac{M_{T,k},....,M_{T,k+N} - y_{M,max}}{y_{M,max} - y_{M,min}} \, .$$

Unterschreitet die Drehmomenttrajektorie M zum k-ten Abtastzeitpunkt hingegen die vorgegebene untere Wertebereichsgrenze $y_{M,min}$, so erfolgt die Berechnung des auf die obere und untere Wertebereichsgrenze $y_{M,min}$, $y_{M,max}$ bezogenen Drehmomentverletzungswertes $v_{M,k}$,...,$v_{M,K+N}$ für den Abtastzeitpunkt k bis zu dem Abtastzeitpunkt K+N nach folgender Formel

$$v_{M,k},....,v_{M,k+N} = \frac{y_{M,min} - M_{T,k},....,M_{T,k+N}}{y_{M,max} - y_{M,min}} \, .$$

$M_{T,k}$,... $M_{T,K+N}$ sind dabei die Trajektorienwerte der Drehmomenttrajektorie M für den Abtastzeitpunkt k bis zu dem Abtastzeitpunkt K+N.

Falls die magnetische Statorflusstrajektorie $\phi$ zum k-ten Abtastzeitpunkt die vorgegebene obere Wertebereichsgrenze $y_{s,max}$ überschreitet, dann erfolgt die Berechnung des auf die obere und untere Wertebereichsgrenze $y_{s,min}$, $y_{s,max}$ bezogenen Statorflussverletzungswertes $v_{S,k}$,...,$v_{S,K+N}$ für den Abtastzeitpunkt k bis zu dem Abtastzeitpunkt K+N nach folgender Formel

$$v_{S,k},...,v_{S,k+N} = \frac{\Phi_{T,k},....,\Phi_{T,k+N} - y_{S,max}}{y_{S,max} - y_{S,min}} \, .$$

Unterschreitet die magnetische Statorflusstrajektorie $\phi$ zum k-ten Abtastzeitpunkt hingegen die vorgegebene untere Wertebereichsgrenze $y_{s,min}$, so erfolgt die Berechnung des auf die obere und untere Wertebereichsgrenze $y_{S,min}$, $y_{S,max}$ bezogenen Statorflussverletzungswertes $v_{S,k}$,...,$v_{S,K+N}$ für den Abtastzeitpunkt k bis zu dem Abtastzeitpunkt K+N nach folgender Formel

$$v_{S,k}, ..., v_{S,k+N} = \frac{y_{S,min} - \Phi_{T,k}, ..., \Phi_{T,k+N}}{y_{S,max} - y_{S,min}},$$

$\phi_{T,k}, ..., \phi_{T,K+N}$ sind dabei die Trajektorienwerte der magnetischen Statorflusstrajektorie $\phi$ für den Abtastzeitpunkt k bis zu dem Abtastzeitpunkt K+N.

Falls die m-2 Potentialtrajektorien $U_{NP}$ zum k-ten Abtastzeitpunkt die vorgegebene obere Wertebereichsgrenze $y_{NP,max}$ überschreiten, erfolgt Berechnung des auf die obere und untere Wertebereichsgrenze $y_{NP,min}, y_{NP,max}$ bezogenen Potentialverletzungswertes $v_{NP,k}, ..., v_{NP,K+N}$ für den Abtastzeitpunkt k bis zu dem Abtastzeitpunkt K+N nach folgender Formel

$$v_{NP,k}, ..., v_{NP,k+N} = \frac{U_{T,k}, ..., U_{T,k+N} - y_{NP,max}}{y_{NP,max} - y_{NP,min}}.$$

Falls die m-2 Potentialtrajektorien $U_{NP}$ zum k-ten Abtastzeitpunkt die vorgegebene untere Wertebereichsgrenze $y_{NP,min}$ hingegen unterschreiten, so erfolgt die Berechnung des auf die obere und untere Wertebereichsgrenze $y_{NP,min}, y_{NP,max}$ bezogenen Potentialverletzungswertes $v_{NP,k}, ..., v_{NP,KIN}$ für den Abtastzeitpunkt k bis zu dem Abtastzeitpunkt K+N nach folgender Formel

$$v_{NP,k}, ..., v_{NP,k+N} = \frac{y_{NP,min} - U_{T,k}, ..., U_{T,k+N}}{y_{NP,max} - y_{NP,min}},$$

wobei $U_{T,k}, ..., U_{T,K+N}$ die Trajektorienwerte der m-2 Potentialtrajektorien $U_{NP}$ für den Abtastzeitpunkt k bis zu dem Abtastzeitpunkt K+N sind.

Es sei der Vollständigkeit halber erwähnt, dass falls allgemein die jeweilige Trajektorie zum k-ten Abtastzeitpunkt innerhalb des Bandes, gebildet durch die zugehörige oberen und untere Wertebereichsgrenze, liegt, der zugehörige Verletzungswert zum Abtastzeitpunkt k bis zu dem Abtastzeitpunkt K+N zu Null gesetzt wird.

**Bezugszeichenliste**

1    rotierende elektrische Maschine

2    Umrichterschaltung zur Schaltung von drei Spannungsniveaus

3    Gleichspannungskreis

4    Teilumrichtersystem

5    erste Schaltgruppe

6    zweite Schaltgruppe

7    dritte Schaltgruppe

**Patentansprüche**

1.  Verfahren zum Betrieb einer rotierenden elektrischen Maschine (1), wobei die rotierende elektrische Maschine phasenmässig mit einer einen Gleichspannungskreis (3) aufweisenden Umrichterschaltung (2) zur Schaltung von m Spannungsniveaus verbunden ist, wobei m$\geq$ 2 ist,

mit den Schritten

(a) Verbindung der Phasen (u, v, w) der Umrichterschaltung (2) mit dem Gleichspannungskreis (3) nach einer ausgewählten Schaltzustandskombination ($SK_{a,k}$) von Schaltzuständen von Leistungshalbleiterschaltern der Umrichterschaltung (2),

(b) beginnend mit einem Startabtastzeitpunkt k für eine wählbare Anzahl N Abtastzeitpunkte:

Bestimmung sämtlicher zulässiger Schaltzustandskombinationen ($SK_k$, ..., $SK_{k+N}$) zu jedem der N Abtastzeitpunkte, wobei N ≥ 1 ist,

(c) Bildung von Schaftzustandssequenzen (SSK) für jede bestimmte Schaltzustandskombination ($SK_k$) zum Startabtastzeitpunkt k, wobei jede Schaltzustandssequenz (SSK) eine Aneinanderreihung von zu der jeweiligen Schaltzustandskombination ($SK_k$) zum Startabtastzeitpunkt k zugehöriger bestimmter Schaltzustandskombinationen ($SK_k$, ..., $SK_{k+N}$) der N Abtastzeitpunkte ist,

**dadurch gekennzeichnet,**
**dass** die Auswahl der Schaltzustandskombination ($Sh_{a,k}$) in folgenden weiteren Schritten erfolgt:

(d) Bestimmung nach Schritt (b) und Bildung nach Schritt (c) mittels eines Field Programmable Gate Arrays (FPGA),
(e1) Berechnung von Zustandszwischenwertesätzen ($Y_{e,k}$,... , $Y_{e,k+N}$) der rotierenden elektrischen Maschine (1) und der Umrichterschaltung (2) für den Startabtastzeitpunkt k bis zum Abtastzeitpunkt k+N mittels eines digitalen Signalprozessors,
(e2) Berechnung von Zustandswertesätzen ($X_{e,k}$,... , $X_{e,k+N}$) aus Schaltzustandssequenzen (SSK) und aus den berechneten Zustandszwischenwertesätzen ($Y_{e,k}$,... , $Y_{e,k-N}$) mittels des FPGAs,
(f) für jede der Schaltzustandssequerizen (SSK) Berechnung einer Drehmomenttrajektorie (M) der rotierenden elektrischen Maschine (1) und einer magnetischen Statorflusstrajektorie ($\phi$) der rotierenden elektrischen Maschine (1) mittels des FPGAs aus den berechneten Zustandswertesätze ($X_{e,k}$,... ,$X_{e,k+N}$) für den Startabtastzeitpunkt k bis zum Abtastzeitpunkt k+N,
(f1) falls die Drehmomenttrajektorie (M) zum k-ten Abtastzeitpunkt eine vorgegebene obere Wertebereichsgrenze ($y_{M,max}$) nicht überschreitet oder eine vorgegebene untere Wertebereichsgrenze ($y_{M,min}$) nicht unterschreitet und falls die magnetischen Statorflusstrajektorie ($\phi$) zum k-ten Abtastzeitpunkt eine vorgegebene obere Wertebereichsgrenze ($y_{s,max}$) nicht überschreitet oder eine vorgegebene untere Wertebereichsgrenze ($y_{s,min}$) nicht unterschreitet, Auswahl der Schaltzustandskombination ($SK_{a,k}$) in folgenden Schritten (g) bis (k),
(g) Auswahl der Schaltzustandssequenzen ($SSK_a$) mittels des FPGAs, bei welchen eine zugehörige Drehmomenttrajektorie (M) und eine magnetische Statorflusstrajektorie ($\phi$) zum (k+N)-ten Abtastzeitpunkt jeweils innerhalb eines vorgegebenen Wertebereichs liegt, oder
bei welchen sich die Trajektorienwerte ($M_{T,k}$, ..., $M_{T,k+N}$) einer zugehörigen Drehmomenttrajektorie (M) und die Trajektorienwerte ($\phi_{T,k}$, ..., $\phi_{T,k+N}$) einer zugehörigen magnetischen Statorflusstrajektorie ($\phi$) bezüglich des k-ten Abtastzeitpunktes bis zum (k+N)-ten Abtastzeitpunkt dem jeweiligen vorgegebenen Wertebereich annähert,
(h) für jede der ausgewählten Schalzzustandssequenzen ($SSK_a$) Bestimmung der Anzahl Zeitpunkte n mittels des FPGAs, bis die Extrapolation der Trajektorienwerte ($M_{T,k+N-1}$, $M_{T,k+N}$) der zugehörigen Drehmomenttrajektorie (M) oder der Trajektorienwerte ($\phi_{T,k+N-1}$, $\phi_{T,k+N}$) der magnetischen Statorflusstrajektorie ($\phi$) bezüglich des (k+N-1)-ten Abtastzeitpunktes und (k+N)-ten Abtastzeitpunktes ausserhalb des jeweiligen vorgegebenen Wertebereichs liegt,
(i) für jede der ausgewählten Schaltzustandssequenzen ($SSK_a$) Bestimmung der Gesamtanzahl Schaltübergänge s der zugehörigen bestimmten Schaltzustandskombinationen ($SK_k$, ..., $SK_{k+N}$) mittels des FPGAs,
(j) für jede der ausgewählten Schaltzustandssequenzen ($SSK_a$) Berechnung eines Gütewertes c aus der Anzahl Zeitpunkte n und der Gesamtanzahl Schaltübergänge s mittels des FPGAs,
(k) Setzen derjenigen bestimmten Schaltzustandskombination ($SK_k$) zum Startabtastzeitpunkt k als ausgewählte Schaltzustandskombination ($SK_{a,k}$) mittels des FPGAs, bei der der Gütewert c der zugehörigen ausgewählten Schaltzustandssequenz (SSK) am kleinsten ist,
(l) falls die Drehmomenttrajektorie (M) zum k-ten Abtastzeitpunkt eine vorgegebene obere Wertebereichsgrenze ($y_{M,max}$) überschreitet oder eine vorgegebene untere Wertebereichsgrenze ($y_{M,min}$) unterschreitet, Berechnung eines auf die obere und untere Wertebereichsgrenze ($y_{M,min}$ ,$y_{M,max}$) bezogenen Drehmomentverletzungswertes ($v_{M,k}$,...,$V_{M,k+N}$) mittels des FPGAs für den Abtastzeitpunkt k bis zu dem Abtastzeitpunkt k+N, falls die magnetischen Statorflusstrajektorie ($\phi$) zum k-ten Abtastzeitpunkt eine vorgegebene obere Wertebereichsgrenze ($y_{s,max}$) überschreitet oder eine vorgegebene untere Wertebereichsgrenze ($y_{S,min}$) unterschreitet, Berechnung eines auf die obere und untere Wertebereichsgrenze ($y_{S,min}$, $y_{S,max}$) bezogenen Statorflussvertetzungswertes ($v_{S,k}$,..., $v_{s,k+N}$) mittels des FPGAs für den Abtastzeitpunkt k bis zu dem Abtastzeitpunkt k+N,
Auswahl der Schaltzustandskombination ($SK_{a,k}$) in folgenden Schritten (m) bis (o),
(m) für jede Schaltzustandssequenz (SSK) und für den Abtastzeitpunkt k bis zu dem Abtastzeitpunkt k+N Bestimmung des Maximalwertes ($v_{max}$) aus den Drehmomentverletzungswerten ($v_{M,k}$,...,$v_{M,k+N}$) und den Statorflussverletzungswerten ($v_{S,k}$,...,$v_{S,k+N}$) mittels des FPGAs,
(n) für jede Schaltzustandssequenz (SSK) Bildung der Summe ($S_-$) aus den Maximalwerten ($v_{max}$) mittels des FPGAs,
(o) Setzen derjenigen bestimmten Schaltzustandskombination ($SK_k$) zum Startabtastzeitpunkt k als ausgewählte Schaltzustandskombination ($SK_{a,k}$) mittels des FPGAs, bei der die Summe ($S_{vmax}$) der Maximalwerte ($v_{max}$) am kleinsten ist,
(p) Wiederholung der Schritte (a) bis (o), wobei k=k+1 ist.

2. Verfahren nach Anspruch 1, **dadurch gekennzeichnet, dass** für m ≥ 3 die Umrichterschaltung (2) zur Schaltung m Spannungsniveaus am Gleichspannungskreis (3) m-2 Teilanschlüsse (NP) aufweist und bezüglich
Schritt (f) für jede der Schaltzustandssequenzen (SSK) zusätzlich m-2 Potentialtrajektorien ($U_{NP}$) für Potentiale an den m-2 Teilanschlüssen (NP) mittels des FPGAs berechnet werden, dass bezüglich
Schritt (g) die Schaltzustandssequenzen ($SSK_a$) mittels des FPGAs ausgewählt werden, bei welchen zusätzlich zugehörige m-2 Potentialtrajektorien ($U_{NP}$) zum (k+N)-ten Abtastzeitpunkt jeweils innerhalb eines vorgegebenen Wertebereichs liegen, oder
bei welchen sich zusätzlich die Trajektorienwerte ($U_{NP,k}$, ..., $U_{NP,k+N}$) zugehöriger m-2 Potentialtrajektorien ($U_{NP}$) bezüglich des k-ten Abtastzeitpunktes bis zum (k+N)-ten Abtastzeitpunkt dem jeweiligen vorgegebenen Wertebereich annähern, und
dass bezüglich
Schritt (h) für jede der ausgewählten Schaltzustandssequenzen ($SSK_a$) die Anzahl Zeitpunkte n mittels des FPGAs bestimmt wird, bis die Extrapolation der Trajektorienwerte ($M_{T,k+N-1}$, $M_{T,k+N}$) der zugehörigen Drehmomenttrajektorie (M) oder der Trajektorienwerte ($\phi_{T,k+N-1}$, $\phi_{T,k+N}$) der magnetischen Statorflusstrajektorie ($\phi$) oder der Trajektorienwerte ($U_{NP,k+N-1}$. $U_{NP,k+N}$) der m-2 Potentialtrajektorien ($U_{NP}$) bezüglich des (k+N-1)-ten Abtastzeitpunktes und (k+N)-ten Abtastzeitpunktes ausserhalb des jeweiligen vorgegebenen Wertebereichs liegt.

3. Verfahren nach Anspruch 1, **gekennzeichnet durch** den weiteren Schritt (q):

Aussetzen von Schritt (b) und Schritt (c) und Bildung einer Schaltzustandssequenz (SSK) für die vorangehende ausgewählte Schaltzustandskombination ($SK_{a,k-1}$) mittels des FPGAs, wobei die Schaltzustandssequenz (SSK) eine Aneinanderreihung von N vorangehenden ausgewählten Schaltzustandskombination ($SK_{a,k-1}$) ist, und Setzen der vorangehenden ausgewählten Schaltzustandskombination ($SK_{a,k-1}$) als ausgewählte Schaltzustandskombination ($SK_{a,k}$) mittels des FPGAs und Anwendung von Schritt (f) und Aussetzung der Schritte (f1) bis (o), falls die Trajektorienwerte ($M_{T,k}$, ..., $M_{T,k+N}$) der zugehörigen Drehmomenttrajektorie (M) und die Trajektorienwerte ($\phi_{T,k}$, ..., $\phi_{T,k+N}$) der zugehörigen magnetischen Statorflusstrajektorie ($\phi$) bezüglich des k-ten Abtastzeitpunktes bis zum (k+N)-ten Abtastzeitpunkt innerhalb des jeweiligen vorgegebenen Wertebereichs liegen.

4. Verfahren nach Anspruch 2, **gekennzeichnet durch** den weiteren Schritt (q):

Aussetzen von Schritt (b) und Schritt (c) und Bildung einer Schaltzustandssequenz (SSK) für die vorangehende ausgewählte Schaltzustandskombination ($SK_{a,k-1}$) mittels des FPGAs, wobei die Schaltzustandssequenz (SSK) eine Aneinanderreihung von N vorangehenden ausgewählten Schaltzustandskombination ($SK_{a,k-1}$) ist, und Setzen der vorangehenden ausgewählten Schaltzustandskombination ($SK_{a,k-1}$) als ausgewählte Schaltzustandskombination ($SK_{a,k}$) mittels des FPGAs und Anwendung von Schritt (f) und Aussetzung der Schritte (f1) bis (o), falls die Trajektorienwerte ($M_{T,k}$, ..., $M_{T,k+N}$) der zugehörigen Drehmomenttrajektorie (M), die Trajektorienwerte ($\phi_{T,k}$, ..., $\phi_{T,k+N}$) der zugehörigen magnetischen Statorflusstrajektorie ($\phi$) und die Trajektorienwerte ($U_{NP,k}$, ..., $U_{NP,k+N}$) zugehöriger m-2 Potentialtrajektorien ($U_{NP}$) bezüglich des k-ten Abtastzeitpunktes bis zum (k+N)-ten Abtastzeitpunkt innerhalb des jeweiligen vorgegebenen Wertebereichs liegen.

5. Verfahren nach einem der Ansprüche 1 bis 4, **dadurch gekennzeichnet, dass** für die Extrapolation der Trajektorienwerte ($M_{T,k+N-1}$, $M_{T,k+N}$) der Drehmomenttrajektorie (M) und der Trajektorienwerte ($\phi_{T,k+N-1}$, $\phi_{T,k+N}$) der magnetischen Statorflusstrajektorie ($\phi$) jeweils eine lineare Extrapolation gewählt wird.

14

6. Verfahren nach einem der Ansprüche 2 oder 4, **dadurch gekennzeichnet, dass** für die Extrapolation der Trajektorienwerte ($M_{T,k+N-1}$, $M_{T,k+N}$) der Drehmomenttrajektorie (M), der Trajektorienwerte ($\phi_{T,k-N-1}$, $\phi_{T,k+N}$) der magnetischen Statorflusstrajektorie ($\phi$) und der Trajektorienwerte ($U_{NP,k+N-1}$, $U_{NP,k+N}$) der m-2 Potentialtrajektorien ($U_{NP}$) jeweils eine lineare Extrapolation gewählt wird.

7. Verfahren nach einem der Ansprüche 1 bis 4, **dadurch gekennzeichnet, dass** für die Extrapolation der Trajektorienwerte ($M_{T,k+N-1}$, $M_{T,k+N}$) der Drehmomenttrajektorie (M) und der Trajektorienwerte ($\phi_{T,k+N-1}$, $\phi_{T,k+N}$) der magnetischen Statortlusstrajektorie ($\phi$) jeweils eine quadratische Extrapolation gewählt wird.

8. Verfahren nach einem der Ansprüche 2 oder 4, **dadurch gekennzeichnet, dass** für die Extrapolation der Trajektorienwerte ($M_{T,k+N-1}$, $M_{T,k+N}$) der Drehmomenttrajektorie (M) und der Trajektorienwerte ($\phi_{T,k+N-1}$, $\phi_{T,k+N}$) der magnetischen Statorflusstrajektorie ($\phi$) jeweils eine quadratische Extrapolation gewählt wird, und
dass für die Extrapolation der Trajektorienwerte ($U_{NP,k+N-1}$, $U_{NP,k+N}$) der m-2 Potentialtrajektorien ($U_{NP}$) eine lineare Extrapolation gewählt wird.

9. Verfahren nach einem der Ansprüche 1 bis 4, **dadurch gekennzeichnet, dass** für die Extrapolation der Trajektorienwerte ($M_{T,k+N-1}$, $M_{T,k+N}$) der Drehmomenttrajektorie (M) eine lineare Extrapolation gewählt wird, und
dass für die Extrapolation der Trajektorienwerte ($\phi_{T,k+N-1}$, $\phi_{T,k+N}$) der magnetischen StatorflusstrajeMorie ($\phi$) eine quadratische Extrapolation gewählt wird.

10. Verfahren nach einem der Ansprüche 2 oder 4, **dadurch gekennzeichnet, dass** für die Extrapolation der Trajektorienwerte ($M_{T,k+N-1}$, $M_{T,k+N}$) der Drehmomenttrajektorie (M) und der Trajektorienwerte ($U_{NP,k+N^-1}$, $U_{NP,k+N}$) der m-2 Potentialtrajektorien ($U_{NP}$) jeweils eine lineare Extrapolation gewählt wird, und
dass für die Extrapolation der Trajektorienwerte ($\phi_{T,k+N-1}$, ($\phi_{T,k+N}$) der magnetischen Statorflusstrajektorie ($\phi$) eine quadratische Extrapolation gewählt wird.

11. Verfahren nach einem der Ansprüche 1 bis 10, **dadurch gekennzeichnet, dass** der Gütewert c durch Division der Gesamtanzahl Schaltübergänge s durch die Anzahl Zeitpunkte n berechnet wird.

12. Verfahren nach Anspruch 1, **dadurch gekennzeichnet, dass** für m ≥ 3 die Umrichterschaltung (2) zur Schaltung von m Spannungsniveaus am Gleichspannungskreis (3) m-2 Teilanschlüsse (NP) aufweist und bezüglich
Schritt (f) für jede der Schaltzustandssequenzen (SSK) zusätzlich m-2 Potentialtrajektorien ($U_{NP}$) für Potentiale an den m-2 Teilanschlüssen (NP) mittels des FPGAs berechnet werden, dass bezüglich
Schritt (I) falls die m-2 Potentialtrajektorien ($U_{NP}$) zum k-ten Abtastzeitpunkt eine vorgegebene obere Wertebereichsgrenze ($y_{NP,max}$) überschreitet oder eine vorgegebene untere Wertebereichsgrenze ($y_{NP,min}$) unterschreitet, ein auf die obere und untere Wertebereichsgrenze ($y_{NP,min}$, $y_{NP,max}$) bezogener Potentialverletzungswert ($v_{NP,k}$,..., $v_{NP,K+N}$) mittels des FPGAs für den Abtastzeitpunkt k bis zu dem Abtastzeitpunkt K+N für jede Potentialtrajektorie ($U_{NP}$) berechnet wird, und dass bezüglich
Schritt (m) für jede Schaltzustandssequenz (SSK) und für den Abtastzeitpunkt k bis zu dem Abtastzeitpunkt K+N der Maximalwert ($v_{max}$) zusätzlich aus den Potentialverletzungswerten ($V_{NP,k}$,...,$v_{NP,K+N}$) mittels des FPGAs bestimmt wird.

13. Verfahren nach einem der Ansprüche 1 oder 12 **dadurch gekennzeichnet, dass** falls die Drehmomenttrajektorie (M) zum k-ten Abtastzeitpunkt die vorgegebene obere Wertebereichsgrenze ($y_{M,max}$) überschreitet, die Berechnung des auf die obere und untere Wertebereichsgrenze ($y_{M,min}$, $y_{M,max}$) bezogenen Drehmomentverletzungswertes ($v_{M,k}$,...,$v_{M,K+N}$) für den Abtastzeitpunkt k bis zu dem Abtastzeitpunkt K+N nach folgender Formel erfolgt

$$v_{M,k},...,v_{M,k+N} = \frac{M_{T,k},...,M_{T,k+N} - y_{M,max}}{y_{M,max} - y_{M,min}},$$

und dass
falls die Drehmomenttrajektorie (M) zum k-ten Abtastzeitpunkt die vorgegebene untere Wertebereichsgrenze ($y_{M,min}$) unterschreitet, die Berechnung des auf die obere und untere Wertebereichsgrenze ($y_{M,min}$, $y_{M,max}$) bezogenen Drehmomentverletzungswertes ($v_{M,k}$,...,$v_{M,K+N}$) für den Abtastzeitpunkt k bis zu dem Abtastzeitpunkt K+N nach folgender Formel erfolgt

$$v_{M,k}, ..., v_{M,k+N} = \frac{y_{M,min} - M_{T,k}, ..., M_{T,k+N}}{y_{M,max} - y_{M,min}},$$

wobei $M_{T,k}, ..., M_{T,K+N}$ die Trajektorienwerte der Drehmomenttrajektorie (M) für den Abtastzeitpunkt k bis zu dem Abtastzeitpunkt K+N sind.

**14.** Verfahren nach einem der Ansprüche 1, 12 oder 13 **dadurch gekennzeichnet, dass** falls die magnetische Stator-flusstrajektorie ($\phi$) zum k-ten Abtastzeitpunkt die vorgegebene obere Wertebereichsgrenze ($y_{s,max}$) überschreitet, die Berechnung des auf die obere und untere Wertebereichsgrenze ($y_{S,min}, y_{S,max}$) bezogenen Statorflussverletzungswertes ($v_{S,k}, ..., v_{S,K+N}$) für den Abtastzeitpunkt k bis zu dem Abtastzeitpunkt K+N nach folgender Formel erfolgt

$$v_{S,k}, ..., v_{S,k+N} = \frac{\Phi_{T,k}, ..., \Phi_{T,k+N} - y_{S,max}}{y_{S,max} - y_{S,min}}.$$

und dass
falls die magnetische Statorflusstrajektorie ($\phi$) zum k-ten Abtastzeitpunkt die vorgegebene untere Wertebereichsgrenze ($y_{S,min}$) unterschreitet , die Berechnung des auf die obere und untere Wertebereichsgrenze ($y_{S,m}, y_{S,max}$) bezogenen Statorflussverletzungswertes ($v_{S,k}, ..., v_{S,K+N}$) für den Abtastzeitpunkt k bis zu dem Abtastzeitpunkt K+N nach folgender Formel erfolgt

$$v_{S,k}, ..., v_{S,k+N} = \frac{y_{S,min} - \Phi_{T,k}, ..., \Phi_{T,k+N}}{y_{S,max} - y_{S,min}},$$

wobei $\phi_{T,k}, ..., \phi_{T,K+N}$ die Trajektorienwerte der magnetischen Statorflusstrajektorie ($\phi$) für den Abtastzeitpunkt k bis zu dem Abtastzeitpunkt K+N sind.

**15.** Verfahren nach Anspruch 12, **dadurch gekennzeichnet, dass** falls die m-2 Potentialtrajektorien ($U_{NP}$) zum k-ten Abtastzeitpunkt die vorgegebene obere Wertebereichsgrenze ($y_{NP,max}$) überschreiten, die Berechnung des auf die obere und untere Wertebereichsgrenze ($y_{NP,min}, y_{NP,max}$) bezogenen Potentialverletzungswertes ($v_{NP,k}, ..., v_{NP,K+N}$) für den Abtastzeitpunkt k bis zu dem Abtastzeitpunkt K+N nach folgender Formel erfolgt

$$v_{NP,k}, ..., v_{NP,k+N} = \frac{U_{T,k}, ..., U_{T,k+N} - y_{NP,max}}{y_{NP,max} - y_{NP,min}},$$

und dass
falls die m-2 Potentialtrajektorien ($U_{NP}$) zum k-ten Abtastzeitpunkt die vorgegebene untere Wertebereichsgrenze ($y_{NP,min}$) unterschreiten, die Berechnung des auf die obere und untere Wertebereichsgrenze ($y_{NP,min}, y_{NP,max}$) bezogenen Potentialverletzungswertes
($V_{NP,k}, ..., V_{NP,K+N}$) für den Abtastzeitpunkt k bis zu dem Abtastzeitpunkt K+N nach folgender Formel erfolgt

$$v_{NP,k}, ..., v_{NP,k+N} = \frac{y_{NP,min} - U_{T,k}, ..., U_{T,k+N}}{y_{NP,max} - y_{NP,min}},$$

wobei $U_{T,k}, ..., U_{T,K+N}$ die Trajektorienwerte der m-2 Potentialtrajektorien ($U_{NP}$) für den Abtastzeitpunkt k bis zu dem Abtastzeitpunkt K+N sind.

**Claims**

1. Method for operating a rotating electrical machine (1), wherein the rotating electrical machine is connected phase-by-phase to a converter circuit (2), which has a DC voltage circuit (3), for switching m voltage levels, where m $\geq$ 2, having the following steps:

   (a) connection of the phases (u, v, w) of the converter circuit (2) to the DC voltage circuit (3) in accordance with a selected switching state combination ($SK_{a,k}$) of switching states of power semiconductor switches in the converter circuit (2),

   (b) starting with a start sampling time k for a selectable number N of sampling times: determination of all the permissible switching state combinations ($SK_k,....SK_{k+N}$) relating to each of the N sampling times, wherein N $\geq$ 1,

   (c) formation of switching state sequences (SSK) for each specific switching state combination ($SK_k$) relating to the start sampling time k, wherein each switching state sequence (SSK) is a sequence of specific switching state combinations ($SK_k,.....SK_{k+N}$) of the N sampling times associated with the respective switching state combination ($SK_k$) relating to the start sampling time k,

   **characterized**
   **in that** the switching state combination ($SK_{a,k}$) is selected in the following further steps:

   (d) determination according to step (b) and formation according to step (c) by means of a field programmable gate array (FPGA),

   (e1) calculation of state intermediate value sets ($Y_{e,k}$, ..., $Y_{e,k+N}$) of the rotating electrical machine (1) and of the converter circuit (2) for the start sampling time k to the sampling time k+N by means of a digital signal processor,

   (e2) calculation of state value sets ($X_{e,k},...,X_{e,k+N}$) from switching state sequences (SSK) and from the calculated state intermediate value sets ($Y_{e,k},.......,Y_{e,k+N}$) by means of the FPGA,

   (f) for each of the switching state sequences (SSK), calculation of a torque trajectory (M) of the rotating electrical machine (1) and of a magnetic stator flux trajectory ($\varphi$) of the rotating electrical machine (1) by means of the FPGA from the calculated state value sets ($X_{e,k},...,X_{e,k+N}$) for the start sampling time k to the sampling time k+N,

   (f1) if the torque trajectory (M) relating to the k-th sampling time does not exceed a predetermined upper value range limit ($y_{M,max}$) or does not undershoot a predetermined lower value range limit ($y_{M,min}$), and if the magnetic stator flux trajectory ($\varphi$) relating to the k-th sampling time does not exceed a predetermined upper value range limit ($y_{s,max}$) or does not undershoot a predetermined lower value range limit ($y_{s,min}$), selection of the switching state combination ($SK_{a,k}$) in following steps (g) to (k),

   (g) selection of the switching state sequences ($SSK_a$) by means of the FPGA for which an associated torque trajectory (M) and a magnetic stator flux trajectory ($\varphi$) relating to the (k+N)-th sampling time are each within a predetermined value range, or
   for which the trajectory values ($M_{T,k},..., M_{T,k+N}$) of an associated torque trajectory (M) and the trajectory values ($\varphi_{T,k},.... \varphi_{T,k+N}$) of an associated magnetic stator flux trajectory ($\varphi$) approach the respective predetermined value range with respect to the k-th sampling time to the (k+N)-th sampling time,

   (h) for each of the selected switching state sequences ($SSK_a$), determination of the number of times n by means of the FPGA until the extrapolation of the trajectory values ($M_{T,k+N-1}, M_{T,k+N}$) of the associated torque trajectory (M) or of the trajectory values ($\varphi_{T,k+N-1}, \varphi_{T,k+N}$) of the magnetic stator flux trajectory ($\varphi$) is outside the respective predetermined value range with respect to the (k+N-1)-th sampling time and the (k+N)-th sampling time,

   (i) for each of the selected switching state sequences ($SSK_a$), determination of the total number of switching transitions s of the associated specific switching state combinations ($SK_k$, ..., $SK_{k+N}$) by means of the FPGA,

   (j) for each of the selected switching state sequences ($SSK_a$), calculation of a quality value c from the number of times n and the total number of switching transitions s by means of the FPGA,

   (k) setting of that specific switching state combination ($SK_k$) with respect to the start sampling time k as the selected switching state combination ($SK_{a,k}$) by means of the FPGA, for which the quality value c of the associated selected switching state sequence ($SSK_a$) is the least,

   (1) if the torque trajectory (M) relating to the k-th sampling time exceeds a predetermined upper value range limit ($y_{M,max}$) or undershoots a predetermined lower value range limit (y-M,min), calculation of a torque infringement value ($V_{M,k}$, ..., $V_{M,k+N}$), which is related to the upper and lower value range limits ($y_{M,min}, Y_{M,max}$), by means of the FPGA for the sampling time k to the sampling time k+N,

   if the magnetic stator flux trajectory ($\varphi$) relating to the k-th sampling time exceeds a predetermined upper value range limit ($y_{s,max}$) or undershoots a predetermined lower value range limit ($y_{s,min}$), calculation of a stator flux infringement value ($V_{s,k}$, ... , $V_{s,k+N}$), related to the upper and lower value range limits ($y_{s,min}$, ..., $y_{s,max}$), by means of the FPGA for the sampling time k to the sampling time k+N,

selection of the switching state combination ($SK_{a,k}$) in the following steps (m) to (o),

(m) for each switching state sequence (SSK) and for the sampling time k to the sampling time k+N, determination of the maximum value ($v_{max}$) from the torque infringement values ($v_{M,k}$, ... , $v_{M,k+N}$) and the stator flux infringement values ($V_{s,k}$,..., $v_{s,k+N}$) by means of the FPGA,

(n) for each switching state sequence (SSK) formation of the sum ($s_{vmax}$) of the maximum values ($v_{max}$) by means of the FPGA,

(o) setting of that specific switching state combination ($SK_k$) relating to the start sampling time k as the selected switching state combination ($SK_{a,k}$) by means of the FPGA for which the sum ($S_{vmax}$) of the maximum values ($v_{max}$) is the least,

(p) repetition of steps (a) to (o), where k=k+1.

2. Method according to Claim 1, **characterized in that**, for m ≥ 3, the converter circuit (2) has m-2 sub-connections (NP) for switching m voltage levels on the DC voltage circuit (3) and, with respect to

step (f), for each of the switching state sequences (SSK), m-2 potential trajectories ($U_{NP}$) are additionally calculated for potentials at the m-2 sub-connections (NP) by means of the FPGA,

**in that**, with respect to

step (g), the switching state sequences ($SSK_a$) are selected by means of the FPGA for which, additionally, associated m-2 potential trajectories ($U_{NP}$) relating to the (k+N)-th sampling time are each within a predetermined value range, or for which, additionally, the trajectory values ($U_{NP,k}$, ... , $U_{NP,k+N}$) of associated m-2 potential trajectories ($U_{NP}$) with respect to the k-th sampling time to the (k+N)-th sampling time approach the respective predetermined value range, and

**in that**, with respect to,

step (h), for each of the selected switching state sequences ($SSK_a$), the number of times n is determined by means of the FPGA until the extrapolation of the trajectory values ($M_{T,k+N-1}$, $M_{T,k+N}$) of the associated torque trajectory (M) or of the trajectory values ($\varphi_{T,k+N-1}$, $\varphi_{T,k+N}$) of the magnetic stator flux trajectory ($\varphi$) or of the trajectory values ($U_{NP,k+N-1}$, $U_{NP,k+N}$) of the m-2 potential trajectories ($U_{NP}$) with respect to the (k+N-1)-th sampling time and the (k+N)-th sampling time is outside the respective predetermined value range.

3. Method according to Claim 1, **characterized by** the further step (q):

leaving step (b) and step (c) and formation of a switching state sequence (SSK) for the previous selected switching state combination ($SK_{a,k-1}$) by means of the FPGA, wherein the switching state sequence (SSK) is a sequence of N previous selected switching state combinations ($SK_{a,k-1}$), and setting of the previous selected switching state combination ($SK_{a,k-1}$) as the selected switching state combination ($SK_{a,k}$) by means of the FPGA, and use of step (f) and leaving steps (f1) to (o) if the trajectory Values ($M_{T,k}$, ... , $M_{T,k+N}$) of the associated torque trajectory (M) and the trajectory values ($\varphi_{T,k}$, ..., $\varphi_{T,k+N}$) of the associated magnetic stator flux trajectory ($\varphi$) with respect to the k-th sampling time to the (k+N)-th sampling time is within the respective predetermined value range.

4. Method according to Claim 2, **characterized by** the further step (q):

leaving step (b) and step (c) and formation of a switching state sequence (SSK) for the previous selected switching state combination ($SK_{a,k-1}$) by means of the FPGA, wherein the switching state sequence (SSK) is a sequence of N previous selected switching state combinations ($SK_{a,k-1}$), and setting of the previous selected switching state combination ($SK_{a,k-1}$) as the selected switching state combination ($SK_{a,k}$) by means of the FPGA, and use of step (f) and leaving steps (f1) to (o) if the trajectory Values ($M_{T,k}$, ... , $M_{T,k+N}$) of the associated torque trajectory (M), the trajectory values ($\varphi_{T,k}$, ..., $\varphi_{T,k+N}$) of the associated magnetic stator flux trajectory ($\varphi$) and the trajectory values ($U_{NP,k}$, ..., $U_{NP,k+N}$) of associated m-2 potential trajectories ($U_{NP}$) with respect to the k-th sampling time to the (k+N)-th sampling time is within the respective predetermined value range.

5. Method according to one of Claims 1 to 4, **characterized in that** a linear extrapolation is in each case selected for the extrapolation of the trajectory values ($M_{T,k+N-1}$, ... .$M_{T,k+N}$) of the torque trajectory (M) and of the trajectory values ($\varphi_{T,k+N-1}$, $\varphi_{T,k+N}$) of the magnetic stator flux trajectory ($\varphi$).

6. Method according to one of Claims 2 or 4, **characterized in that** a linear extrapolation is in each case selected for the extrapolation of the trajectory values ($M_{T,k+N-1}$, $M_{T,k+N}$) of the torque trajectory (M), of the trajectory values ($\varphi_{T,k+N-1}$, $\varphi_{T,k+N}$) of the magnetic stator flux trajectory ($\varphi$) and of the trajectory values ($U_{NP,k+N-1}$, $U_{NP,k+N}$) of the m-2 potential trajectories ($U_{NP}$).

7. Method according to one of Claims 1 to 4, **characterized in that** a quadratic extrapolation is in each case selected for the extrapolation of the trajectory values ($M_{T,k+N-1}, ... .M_{T,k+N}$) of the torque trajectory (M) and of the trajectory values ($\varphi_{T,k+N-1}, \varphi_{T,k+N}$) of the magnetic stator flux trajectory ($\varphi$).

8. Method according to one of Claims 2 or 4, **characterized in that** a quadratic extrapolation is in each case selected for the extrapolation of the trajectory values ($M_{T,k+N-1}, ... .M_{T,k+N}$) of the torque trajectory (M) and of the trajectory values ($\varphi_{T,k+N-1}, \varphi_{T,k+N}$) of the magnetic stator flux trajectory ($\varphi$), and **in that** a linear extrapolation is selected for the extrapolation of the trajectory values ($U_{NP,k+N-1}, U_{NP,k+N}$) of the m-2 potential trajectories ($U_{NP}$).

9. Method according to one of Claims 1 to 4, **characterized in that** a linear extrapolation is selected for the extrapolation of the trajectory values ($M_{T,k+N-1}, M_{T,k+N}$) of the torque trajectory (M), and **in that** a quadratic extrapolation is selected for the extrapolation of the trajectory values ($\varphi_{T,k+N-1}, \varphi_{T,k+N}$) of the magnetic stator flux trajectory ($\varphi$).

10. Method according to one of Claims 2 or 4, **characterized in that** a linear extrapolation is in each case selected for the extrapolation of the trajectory values ($M_{T,k+N-1}, M_{T,k+N}$) of the torque trajectory (M) and of the trajectory values ($U_{NP,k+N-1}, U_{NP,k+N}$) of the m-2 potential trajectories ($U_{NP}$), and **in that** a quadratic extrapolation is selected for the extrapolation of the trajectory values ($\varphi_{T,k+N-1}, \varphi_{T,k+N}$) of the magnetic stator flux trajectory ($\varphi$).

11. Method according to one of Claims 1 to 10, **characterized in that** the quality value c is calculated by division of the total number of switching transitions s by the number of times n.

12. Method according to Claim 1, **characterized in that**, for m $\geq$ 3, the converter circuit (2) for switching m voltage levels at the DC voltage circuit (3) has m-2 sub-connections (NP), and, with respect to step (f), for each of the switching state sequences (SSK), m-2 potential trajectories ($U_{NP}$) are additionally calculated for potentials at the m-2 sub-connections (NP) by means of the FPGA, **in that**, with respect to step (1), if the m-2 potential trajectories ($U_{NP}$) relating to the k-th sampling time exceed a predetermined upper value range limit ($y_{NP,max}$) or undershoot a predetermined lower value range limit ($y_{NP,min}$), a potential infringement value ($V_{NP,k}, ..., V_{NP,k+N}$), which is related to the upper and lower value range limits ($y_{NP,min}, Y_{NP,max}$), is calculated by means of the FPGA for the sampling time k to the sampling time K+N for each potential trajectory ($U_{NP}$), and **in that**, with respect to step (m), for each switching state sequence (SSK) and for the sampling time k to the sampling time K+N, the maximum value ($v_{max}$) is additionally determined from the potential infringement values ($V_{NP,k}, ..., V_{NP,k+N}$) by means of the FPGA.

13. Method according to one of Claims 1 or 12, **characterized in that**, if the torque trajectory (M) relating to the k-th sampling time exceeds the predetermined upper value range limit ($y_{M,max}$), the calculation of the torque infringement value ($v_{m,k}, ......, v_{m,k+N}$), which is related to the upper and lower value range limits ($y_{M,min}, Y_{M,max}$), for the sampling time k to the sampling time K+N is carried out using the following formula:

$$v_{M,k}, ..., v_{M,k+N} = \frac{M_{T,k}, ..., M_{T,k+N} - y_{M,max}}{y_{M,max} - y_{M,min}},$$

and **in that** if the torque trajectory (M) relating to the k-th sampling time undershoots the predetermined lower value range limit ($y_{M,min}$), the torque infringement value ($v_{M,k}, ..., v_{M,k+N}$), which is related to the upper and lower value range limits ($y_{M,min}, y_{M,max}$), for the sampling time k to the sampling time K+N is calculated using the following formula:

$$V_{M,k}, ..., V_{M,k+N} = \frac{y_{M,min} - M_{T,k}, ..., M_{T,k+N}}{y_{M,max} - y_{M,min}},$$

where $M_{T,k}$, ..., $M_{T,k+N}$ are the trajectory values of the torque trajectory (M) for the sampling time k to the sampling time K+N.

**14.** Method according to one of Claims 1, 12 or 13, **characterized in that**, if the magnetic stator flux trajectory ($\varphi$) relating to the k-th sampling time exceeds the predetermined upper value range limit ($y_{s,max}$), the stator flux infringement value ($v_{s,k}$, ..., $v_{s,K+N}$), which is related to the upper and lower value range limits ($y_{s,min}$, $y_{s,max}$), for the sampling time k to the sampling time K+N is calculated using the following formula:

$$V_{S,k}, ..., V_{S,k+N} = \frac{\Phi_{T,k}, ..., \Phi_{T,k+N} - y_{S,max}}{y_{S,max} - y_{S,min}},$$

and **in that**

if the magnetic stator flux trajectory ($\varphi$) relating to the k-th sampling time undershoots the predetermined lower value range limit ($y_{s,min}$), the stator flux infringement value ($v_{s,k}$, ..., $V_{s,K+N}$), which is related to the upper and lower value range limits ($y_{s,min}$, $y_{s,max}$), for the sampling time k to the sampling time K+N is calculated using the following formula:

$$V_{S,k}, ..., V_{S,k+N} = \frac{y_{S,min} - \Phi_{T,k}, ..., \Phi_{T,k+N}}{y_{S,max} - y_{S,min}},$$

where $\varphi_{T,k}$, ..., $\varphi_{T,k+N}$ are the trajectory values of the magnetic stator flux trajectory ($\varphi$) for the sampling time k to the sampling time K+N.

**15.** Method according to Claim 12, **characterized in that**, if the m-2 potential trajectories ($U_{NP}$) relating to the k-th sampling time exceed the predetermined upper value range limit ($y_{NP, max}$), the potential infringement value ($y_{NP,min}$, $y_{NP,max}$), which is related to the upper and lower value range limits ($V_{NP,K}$, ..., $V_{NP,K+N}$), for the sampling time k to the sampling time K+N is calculated using the following formula:

$$V_{NP,k}, ..., V_{NP,k+N} = \frac{U_{T,k}, ..., U_{T,k+N} - y_{NP,max}}{y_{NP,max} - y_{NP,min}},$$

and **in that**,

if the m-2 potential trajectories ($U_{NP}$) relating to the k-th sampling time undershoot the predetermined lower value range limit ($y_{NP,min}$), the potential infringement value ($v_{NP,k}$, ..., $v_{NP,k+N}$), which relates to the upper and lower value range limits ($y_{NP,min}$, $Y_{NPmax}$), for the sampling time k to the sampling time K+N is calculated using the following formula:

$$V_{NP,k},...,V_{NP,k+N} = \frac{y_{NP,min} - U_{T,k},...,U_{T,k+N}}{y_{NP,max} - y_{NP,min}},$$

where $U_{T,k}$, ..., $U_{T,K+N}$ are the trajectory values of the m-2 potential trajectories ($U_{NP}$) for the sampling time k to the sampling time K+N.

## Revendications

1. Procédé pour faire fonctionner une machine électrique rotative (1), selon lequel la machine électrique rotative est reliée en concordance de phase avec un circuit onduleur (2) présentant un circuit à tension continue (3) et destiné à commuter m niveaux de tension, avec m $\geq$ 2, comprenant les étapes suivantes

   (a) connexion des phases (u, v, w) du circuit onduleur (2) avec le circuit à tension continue (3) d'après une combinaison choisie d'états de commutation ($SK_{a,k}$) des états de commutation des commutateurs semiconducteurs de puissance du circuit onduleur (2),
   (b) en commençant par un instant d'échantillonnage de départ k pour un nombre N sélectionnable d'instants d'échantillonnage :

   détermination de toutes les combinaisons d'états de commutation ($SK_k$, ..., $SK_{k+N}$) autorisées pour chacun des N instants d'échantillonnage, avec N $\geq$ 1,

   (c) formation de séquences d'états de commutation (SSK) pour chaque combinaison d'états de commutation ($SK_k$) déterminée à l'instant d'échantillonnage de départ k, chaque séquence d'états de commutation (SSK) étant un alignement l'une contre l'autre de combinaisons d'états de commutation ($SK_k$, ..., $SK_{k+N}$) données des N instants d'échantillonnage, associées à la combinaison d'états de commutation ($SK_k$) respective à l'instant d'échantillonnage de départ k,

   **caractérisé en ce**
   **que** la sélection de la combinaison d'états de commutation ($SK_{a,k}$) s'effectue dans les étapes supplémentaires ci-après :

   (d) détermination selon l'étape (b) et formation selon l'étape (c) au moyen d'un réseau logique programmable sur site (FPGA),
   (e1) calcul d'ensembles de valeurs intermédiaires d'état ($Y_{e,k}$, ..., $Y_{e,k+N}$) de la machine électrique rotative (1) et du circuit onduleur (2) pour l'instant d'échantillonnage de départ k jusqu'à l'instant d'échantillonnage k + N au moyen d'un processeur de signal numérique,
   (e2) calcul d'ensembles de valeurs d'état ($X_{e,k}$, ..., $X_{e,k+N}$) à partir de séquences d'états de commutation (SSK) et à partir des ensembles de valeurs intermédiaires d'état ($Y_{e,k}$, ..., $Y_{e,k+N}$) calculés au moyen du FPGA,
   (f) pour chacune des séquences d'états de commutation (SSK), calcul d'une trajectoire de couple (M) de la machine électrique rotative (1) et d'une trajectoire de flux de stator magnétique ($\phi$) de la machine électrique rotative (1) au moyen du FPGA à partir des ensembles de valeurs d'état ($X_{e,k}$, ..., $X_{e,k+N}$) calculés pour l'instant d'échantillonnage de départ k jusqu'à l'instant d'échantillonnage k + N,
   (f1) si la trajectoire de couple (M) ne dépasse pas une limite supérieure ($y_{M,max}$) prédéfinie d'une plage de valeurs ou ne devient pas inférieure à une limite inférieure ($y_{M,min}$) prédéfinie d'une plage de valeurs au k-ème instant d'échantillonnage et si la trajectoire de flux de stator magnétique ($\phi$) ne dépasse pas une limite supérieure ($y_{S,max}$) prédéfinie d'une plage de valeurs ou ne devient pas inférieure à une limite inférieure ($y_{S,min}$) prédéfinie d'une plage de valeurs au k-ème instant d'échantillonnage, sélection de la combinaison d'états de commutation ($SK_{a,k}$) dans les étapes (g) à (k) ci-après,
   (g) sélection au moyen du FPGA des séquences d'états de commutation ($SSK_a$) auxquelles une trajectoire de couple (M) associée et une trajectoire de flux de stator magnétique ($\phi$) se trouvent respectivement à l'intérieur d'une plage de valeurs prédéfinie au (k+N)-ème instant d'échantillonnage, ou auxquelles les valeurs de trajectoire ($M_{T,k}$, ..., $M_{T,k+N}$) d'une trajectoire de couple (M) associée et les valeurs

de trajectoire ($\phi_{T,k}$, ..., $\phi_{T,\ k+N}$) d'une trajectoire de flux de stator magnétique ($\phi$) associée concernant le k-ème instant d'échantillonnage se rapprochent de la plage de valeurs prédéfinie respective jusqu'au (k+N)-ème instant d'échantillonnage,

(h) pour chacune des séquences d'états de commutation ($SSK_a$) sélectionnées, détermination au moyen du FPGA du nombre d'instants n jusqu'à ce que l'extrapolation des valeurs de trajectoire ($M_{T,k+N-1}$, ... , $M_{T,\ k+N}$) de la trajectoire de couple (M) associée ou des valeurs de trajectoire ($\phi_{T,k+N-1}$, ..., $\phi_{T,\ k+N}$) de la trajectoire de flux de stator magnétique ($\phi$) concernant le (k+N-1)-ème instant d'échantillonnage et le (k+N)-ème instant d'échantillonnage se trouve en-dehors de la plage de valeurs prédéfinie respective,

(i) pour chacune des séquences d'états de commutation ($SSK_a$) sélectionnées, détermination au moyen du FPGA du nombre total de transitions de commutation s des combinaisons d'états de commutation ($SK_k$, ... , $SK_{k+N}$) déterminées associées,

(j) pour chacune des séquences d'états de commutation ($SSK_a$) sélectionnées, calcul au moyen du FPGA d'un facteur de qualité c à partir du nombre d'instants n et du nombre total de transitions de commutation s,

(k) déclaration, au moyen du FPGA, en tant que combinaison d'états de commutation sélectionnée ($SK_{a,\ k}$) de la combinaison d'états de commutation ($SK_k$) à l'instant d'échantillonnage de départ k déterminée pour laquelle le facteur de qualité c de la séquence d'états de commutation ($SSK_a$) sélectionnée associée est le plus petit,

(l) si la trajectoire de couple (M) au k-ème instant d'échantillonnage dépasse une limite supérieure ($y_{M,max}$) prédéfinie d'une plage de valeurs ou devient inférieure à une limite inférieure ($y_{M,min}$) prédéfinie d'une plage de valeurs, calcul au moyen du FPGA d'un facteur de dégradation du couple ($V_{M,k}$, ..., $V_{M,k+N}$) rapporté à la limite supérieure et inférieure ($y_{M,min}$, $Y_{M,max}$) de la plage de valeurs pour l'instant d'échantillonnage k jusqu'à l'instant d'échantillonnage k + N,

si la trajectoire de flux de stator magnétique ($\phi$) au k-ème instant d'échantillonnage dépasse une limite supérieure ($y_{S,max}$) prédéfinie d'une plage de valeurs ou devient inférieure à une limite inférieure ($y_{S,min}$) prédéfinie d'une plage de valeurs, calcul au moyen du FPGA d'un facteur de dégradation du flux du stator ($V_{S,k}$, ..., $V_{S,k+N}$) rapporté à la limite supérieure et inférieure ($y_{S,min}$, $y_{S,max}$) de la plage de valeurs pour l'instant d'échantillonnage k jusqu'à l'instant d'échantillonnage k + N,

sélection de la combinaison d'états de commutation ($SK_{a,\ k}$) dans les étapes (m) à (o) ci-après,

(m) pour chacune des séquences d'états de commutation (SSK) et pour l'instant d'échantillonnage k jusqu'à l'instant d'échantillonnage k + N, détermination au moyen du FPGA de la valeur maximale ($v_{max}$) à partir des facteurs de dégradation du couple ($V_{M,\ k}$, ..., $V_{M,\ k+N}$) et des facteurs de dégradation du flux du stator ($V_{s,\ k}$, ..., $V_{s,\ k+N}$),

(n) pour chacune des séquences d'états de commutation (SSK), calcul au moyen du FPGA de la somme ($S_{vmax}$) des valeurs maximales ($v_{max}$),

(o) déclaration, au moyen du FPGA, en tant que combinaison d'états de commutation sélectionnée ($SK_{a,\ k}$) de la combinaison d'états de commutation ($SK_k$) à l'instant d'échantillonnage de départ k déterminée pour laquelle la somme ($S_{vmax}$) des valeurs maximales ($v_{max}$) est la plus petite,

(p) répétition des étapes (a) à (o), avec k = k+1.

2. Procédé selon la revendication 1, **caractérisé en ce que** pour m ≥ 3, le circuit onduleur (2) présente m-2 bornes partielles (NP) pour la commutation de m niveaux de tension sur le circuit à tension continue (3) et concernant l'étape (f), pour chacune des séquences d'états de commutation (SSK), m-2 trajectoires de potentiel ($U_{NP}$) sont calculées en plus au moyen du FPGA pour les potentiels aux m-2 bornes partielles (NP),

**en ce que** concernant

l'étape (g), les séquences d'états de commutation ($SSK_a$) sélectionnées au moyen du FPGA sont celles auxquelles m-2 trajectoires de potentiel ($U_{NP}$) associées en plus au (k+N)-ème instant d'échantillonnage se trouvent à chaque fois à l'intérieur d'une plage de valeurs prédéfinie, ou

les valeurs de trajectoire ($U_{NP,k}$, ... , $U_{NP,k+N}$) des m-2 trajectoires de potentiel ($U_{NP}$) associées concernant le k-ème instant d'échantillonnage jusqu'au (k+N)-ème instant d'échantillonnage s'approchent de la plage de valeurs prédéfinie respective et

**en ce que** concernant

l'étape (h), pour chacune des séquences d'états de commutation (SSKa) sélectionnées, le nombre d'instants n jusqu'à ce que l'extrapolation des valeurs de trajectoire ($M_{T,k+N-1}$, ..., $M_{T,k+N}$) de la trajectoire de couple (M) associée ou des valeurs de trajectoire ($\phi_{T,k+N-1}$, ..., $\phi_{T,k+N}$) de la trajectoire de flux de stator magnétique ($\phi$) ou des valeurs de trajectoire ($U_{NP,k+N-1}$, ... , $U_{NP,k+N}$) des m-2 trajectoires de potentiel ($U_{NP}$) concernant le (k+N-1)-ème instant d'échantillonnage et le (k+N)-ème instant d'échantillonnage se trouve en-dehors de la plage de valeurs prédéfinie respective est déterminé au moyen du FPGA.

3. Procédé selon la revendication 1, **caractérisé par** l'étape (q) supplémentaire :

interruption de l'étape (b) et de l'étape (c) et formation au moyen du FPGA d'une séquence d'états de commutation (SSK) pour la combinaison d'états de commutation ($SK_{a,k-1}$) sélectionnée précédemment, la séquence d'états de commutation (SSK) étant un alignement l'une contre l'autre de N combinaisons d'états de commutation ($SK_{a,k-1}$) sélectionnées précédemment, et déclaration, au moyen du FPGA, en tant que combinaison d'états de commutation ($SK_{a,k}$) sélectionnée de la combinaison d'états de commutation ($SK_{a,k-1}$) sélectionnée précédemment et utilisation de l'étape (f) et interruption des étapes (f1) à (o) si les valeurs de trajectoire ($M_{T,k}$, ... , $M_{T,k+N}$) de la trajectoire de couple (M) associée et les valeurs de trajectoire ($\phi_{T,k}$, ..., $\phi_{T, k+N}$) de la trajectoire de flux de stator magnétique ($\phi$) associée concernant le k-ème instant d'échantillonnage jusqu'au (k+N)-ème instant d'échantillonnage se trouvent à l'intérieur de la plage de valeurs prédéfinie respective.

4. Procédé selon la revendication 2, **caractérisé par** l'étape (q) supplémentaire :

interruption de l'étape (b) et de l'étape (c) et formation au moyen du FPGA d'une séquence d'états de commutation (SSK) pour la combinaison d'états de commutation ($SK_{a,k-1}$) sélectionnée précédemment, la séquence d'états de commutation (SSK) étant un alignement l'une contre l'autre de N combinaisons d'états de commutation ($SK_{a,k-1}$) sélectionnées précédemment, et déclaration, au moyen du FPGA, en tant que combinaison d'états de commutation ($SK_{a,k}$) sélectionnée de la combinaison d'états de commutation ($SK_{a,k-1}$) sélectionnée précédemment et utilisation de l'étape (f) et interruption des étapes (f1) à (o) si les Valeurs de trajectoire ($M_{T,k}$, ..., $M_{T,k+N}$) de la trajectoire de couple (M) associée, les valeurs de trajectoire ($\phi_{T,k}$, ..., $\phi_{T,k+N}$) de la trajectoire de flux de stator magnétique ($\phi$) associée et les valeurs de trajectoire ($U_{NP,k}$, ..., $U_{NP,k+N}$) des m-2 trajectoires de potentiel ($U_{NP}$) associées concernant le k-ème instant d'échantillonnage jusqu'au (k+N)-ème instant d'échantillonnage se trouvent à l'intérieur de la plage de valeurs prédéfinie respective.

5. Procédé selon l'une des revendications 1 à 4, **caractérisé en ce qu'**une extrapolation linéaire est à chaque fois choisie pour l'extrapolation des valeurs de trajectoire ($M_{T,k+N-1}$, ..., $M_{T, k+N}$) de la trajectoire de couple (M) et des valeurs de trajectoire ($\phi_{T,k+N-1}$, ..., $\phi_{T, k+N}$) de la trajectoire de flux de stator magnétique ($\phi$).

6. Procédé selon l'une des revendications 2 ou 4, **caractérisé en ce qu'**une extrapolation linéaire est à chaque fois choisie pour l'extrapolation des valeurs de trajectoire ($M_{T,k+N-1}$, ..., $M_{T, k+N}$) de la trajectoire de couple (M), des valeurs de trajectoire ($\phi_{T,k+N-1}$, ..., $\phi_{T, k+N}$) de la trajectoire de flux de stator magnétique ($\phi$) et des valeurs de trajectoire ($U_{NP,k+N-1}$, ..., $U_{NP,k+N}$) des m-2 trajectoires de potentiel ($U_{NP}$).

7. Procédé selon l'une des revendications 1 à 4, **caractérisé en ce qu'**une extrapolation quadratique est à chaque fois choisie pour l'extrapolation des valeurs de trajectoire ($M_{T,k+N-1}$, ..., $M_{T, k+N}$) de la trajectoire de couple (M) et des valeurs de trajectoire ($\phi_{T,k+N-1}$, ..., $\phi_{T, k+N}$) de la trajectoire de flux de stator magnétique ($\phi$).

8. Procédé selon l'une des revendications 2 ou 4, **caractérisé en ce qu'**une extrapolation quadratique est à chaque fois choisie pour l'extrapolation des valeurs de trajectoire ($M_{T,k+N-1}$, ..., $M_{T, k+N}$) de la trajectoire de couple (M) et des valeurs de trajectoire ($\phi_{T,k+N-1}$, ..., $\phi_{T, k+N}$) de la trajectoire de flux de stator magnétique ($\phi$) et **en ce qu'**une extrapolation linéaire est choisie pour l'extrapolation des valeurs de trajectoire ($U_{NP,k+N-1}$, ..., $U_{NP,k+N}$) des m-2 trajectoires de potentiel ($U_{NP}$).

9. Procédé selon l'une des revendications 1 à 4, **caractérisé en ce qu'**une extrapolation linéaire est choisie pour l'extrapolation des valeurs de trajectoire ($M_{T,k+N-1}$, ..., $M_{T, k+N}$) de la trajectoire de couple (M) et **en ce qu'**une extrapolation quadratique est choisie pour l'extrapolation des valeurs de trajectoire ($\phi_{T, k+N-1}$, ..., $\phi_{T, k+N}$) de la trajectoire de flux de stator magnétique ($\phi$).

10. Procédé selon l'une des revendications 2 ou 4, **caractérisé en ce qu'**une extrapolation linéaire est à chaque fois choisie pour l'extrapolation des valeurs de trajectoire ($M_{T, k+N-1}$, ..., $M_{T, k+N}$) de la trajectoire de couple (M) et des valeurs de trajectoire ($U_{NP, k+N-1}$, ..., $U_{NP,k+N}$) des m-2 trajectoires de potentiel ($U_{NP}$) et **en ce qu'**une extrapolation quadratique est choisie pour l'extrapolation des valeurs de trajectoire ($\phi_{T,k+N-1}$, ..., $\phi_{T, k+N}$) de la trajectoire de flux de stator magnétique ($\phi$).

11. Procédé selon l'une des revendications 1 à 10, **caractérisé en ce que** le facteur de qualité c est calculé en divisant le nombre total de transitions de commutation s par le nombre d'instants n.

12. Procédé selon la revendication 1, **caractérisé en ce que** pour m ≥ 3, le circuit onduleur (2) présente m-2 bornes partielles (NP) pour la commutation de m niveaux de tension sur le circuit à tension continue (3) et concernant

l'étape (f), pour chacune des séquences d'états de commutation (SSK), m-2 trajectoires de potentiel ($U_{NP}$) sont calculées en plus au moyen du FPGA pour les potentiels aux m-2 bornes partielles (NP),

**en ce que** concernant

l'étape (1), si les m-2 trajectoires de potentiel ($U_{NP}$) au k-ème instant d'échantillonnage dépassent une limite supérieure ($y_{NP,max}$) prédéfinie d'une plage de valeurs ou deviennent inférieures à une limite inférieure ($y_{NP,min}$) prédéfinie d'une plage de valeurs, un facteur de dégradation du potentiel ($V_{NP,k}$, ..., $V_{N,k+N}$) rapporté à la limite supérieure et inférieure ($Y_{NP,min}$, $Y_{NP,max}$) de la plage de valeurs est calculé au moyen du FPGA pour l'instant d'échantillonnage k jusqu'à l'instant d'échantillonnage k + N pour chaque trajectoire de potentiel ($U_{NP}$), et **en ce que** concernant l'étape (m), pour chacune des séquences d'états de commutation (SSK) et pour l'instant d'échantillonnage k jusqu'à l'instant d'échantillonnage k + N, la valeur maximale ($v_{max}$) est en plus déterminée au moyen du FPGA à partir des facteurs de dégradation du potentiel ($V_{NP,k}$, ..., $V_{NP,k+N}$).

13. Procédé selon l'une des revendications 1 ou 12, **caractérisé en ce que** si la trajectoire de couple (M) au k-ème instant d'échantillonnage dépasse la limite supérieure ($y_{M,max}$) prédéfinie de la plage de valeurs, le calcul du facteur de dégradation du couple ($V_{M,k}$, ..., $V_{M,k+N}$) rapporté à la limite supérieure et inférieure ($Y_{M,min}$, $y_{M,max}$) de la plage de valeurs pour l'instant d'échantillonnage k jusqu'à l'instant d'échantillonnage k + N est réalisé selon la formule suivante

$$V_{M,k}, \quad ..., \quad V_{M,k+N} \;=\; \frac{M_{T,k}...M_{T,k+N} - y_{M,max}}{y_{M,max} - y_{M,min}}$$

et **en ce que**

si la trajectoire de couple (M) au k-ème instant d'échantillonnage devient inférieure à la limite inférieure ($y_{M,min}$) prédéfinie de la plage de valeurs, le calcul du facteur de dégradation du couple ($V_{M,k}$, ..., $V_{M,k+N}$) rapporté à la limite supérieure et inférieure ($Y_{M,min}$, $Y_{M,max}$) de la plage de valeurs pour l'instant d'échantillonnage k jusqu'à l'instant d'échantillonnage k + N est réalisé selon la formule suivante

$$V_{M,k}, \quad ..., \quad V_{M,k+N} \;=\; \frac{y_{M,min} - M_{T,k}...M_{T,k+N}}{y_{M,max} - y_{M,min}}$$

$M_{T,k}$, ..., $M_{T,k+N}$ désignant les valeurs de trajectoire de la trajectoire de couple (M) pour l'instant d'échantillonnage k jusqu'à l'instant d'échantillonnage k + N.

14. Procédé selon l'une des revendications 1, 12 ou 13, **caractérisé en ce que** si la trajectoire de flux de stator magnétique ($\phi$) a u k-ème instant d'échantillonnage dépasse la limite supérieure ($y_{s,max}$) prédéfinie de la plage de valeurs, le calcul du facteur de dégradation du flux de stator ($V_{s,k}$, ... , $V_{s,k+N}$) rapporté à la limite supérieure et inférieure ($y_{s,min}$, $y_{s,max}$) de la plage de valeurs pour l'instant d'échantillonnage k jusqu'à l'instant d'échantillonnage k + N est réalisé selon la formule suivante

$$V_{S,k}, \quad ..., \quad V_{S,k+N} \;=\; \frac{\Phi_{T,k}...\Phi_{T,k+N} - y_{S,max}}{y_{S,max} - y_{S,min}}$$

et **en ce que**

si la trajectoire de flux de stator magnétique ($\phi$) au k-ème instant d'échantillonnage devient inférieure à la limite inférieure ($y_{s,min}$) prédéfinie de la plage de valeurs, le calcul du facteur de dégradation du flux de stator ($V_{s,k}$, ..., $V_{s,k+N}$) rapporté à la limite supérieure et inférieure ($y_{s,min}$, $y_{s,max}$) de la plage de valeurs pour l'instant d'échantillonnage k jusqu'à l'instant d'échantillonnage k + N est réalisé selon la formule suivante

$$V_{S,k}, \quad ..., \quad V_{S,k+N} \;=\; \frac{y_{S,min} - \Phi_{T,k}...\Phi_{T,k+N}}{y_{S,max} - y_{S,min}}$$

$\phi_{T,k}$, ... , $\phi_{T,k+N}$ désignant les valeurs de trajectoire de la trajectoire de flux de stator magnétique ($\phi$) pour l'instant d'échantillonnage k jusqu'à l'instant d'échantillonnage k + N.

**15.** Procédé selon la revendication 12, **caractérisé en ce que** si les m-2 trajectoires de potentiel ($U_{NP}$) au k-ème instant d'échantillonnage dépassent la limite supérieure ($y_{NP,max}$) prédéfinie de la plage de valeurs, le calcul du facteur de dégradation du potentiel ($V_{NP,k}$, ..., $V_{NP,k+N}$) rapporté à la limite supérieure et inférieure ($y_{NP,min}$, $y_{NP,max}$) de la plage de valeurs pour l'instant d'échantillonnage k jusqu'à l'instant d'échantillonnage k + N est réalisé selon la formule suivante

$$V_{NP,k}, \quad \dots, \quad V_{NP,k+N} = \frac{U_{T,k}\dots U_{T,k+N} - y_{NP,max}}{y_{NP,max} - y_{NP,min}}$$

et **en ce que**
si les m-2 trajectoires de potentiel ($U_{NP}$) au k-ème instant d'échantillonnage deviennent inférieures à la limite inférieure ($y_{NP,min}$) prédéfinie de la plage de valeurs, le calcul du facteur de dégradation du potentiel ($V_{NP,k}$, ... , $V_{NP,k+N}$) rapporté à la limite supérieure et inférieure ($y_{NP,min}$, $y_{NP,max}$) de la plage de valeurs pour l'instant d'échantillonnage k jusqu'à l'instant d'échantillonnage k + N est réalisé selon la formule suivante

$$V_{NP,k}, \quad \dots, \quad V_{NP,k+N} = \frac{y_{NP,min} - U_{T,k}\dots U_{T,k+N}}{y_{NP,max} - y_{NP,min}}$$

$U_{T,k}$, ..., $U_{T,k+N}$ désignant les valeurs de trajectoire des m-2 trajectoires de potentiel ($U_{NP}$) pour l'instant d'échantillonnage k jusqu'à l'instant d'échantillonnage k + N.

Fig. 1

**Fig. 2**

Fig. 3

k  k+1  k+2  k+3

**EP 2 223 426 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1670135 A1